# EUROPÄISCHE PATENTANMELDUNG

(11) **EP 3 454 233 A1**
(43) Veröffentlichungstag der Anmeldung: **13.03.2019**
(21) Anmeldenummer: 17020416.8
(22) Anmeldetag: 08.09.2017
(51) Int. Cl.: G06F 17/50, G06F 17/30

(54) **VERFAHREN ZUM AUFFINDEN VON TECHNISCHEN LÖSUNGSELEMENTEN ZUR VERWENDUNG BEI DER KONSTRUKTION VON INDUSTRIELLEN ERZEUGNISSEN**

(71) Anmelder: CADBAS GmbH, 45145 Essen (DE)
(72) Erfinder: Lewandowski-Kaufmann, Andreas, 42549 Velbert (DE)
(74) Vertreter: Von Rohr Patentanwälte Partnerschaft mbB

(57) **Zusammenfassung**

Die Erfindung betrifft das Auffinden von technischen Lösungselementen, vorzugsweise von Bauteilen oder Baugruppen eines industriellen Erzeugnisses, mittels einer automatisierten Suche, zur Verwendung in einem CAD-System für die Konstruktion und/oder automatisierte Herstellung eines industriellen Erzeugnisses, mittels eines Suchprofils, mit mindestens einer Datenverarbeitungseinrichtung zur Verarbeitung des Suchprofils und mit einer Speichereinrichtung, insbesondere Datenbank, aufweisend zu den Lösungselementen korrespondierende Objektprofile.

## Beschreibung

Die vorliegende Erfindung betrifft ein System, eine Verwendung, ein Verfahren und ein Computerprogrammprodukt zum Auffinden bzw. zur automatisierten Suche von technischen Lösungselementen zur Verwendung bei der Konstruktion und/oder Konfiguration von industriellen Erzeugnissen.

Insbesondere betrifft die vorliegende Erfindung das Auffinden und die Wiederverwendung von bereits konstruierten und ggf. getesteten, validierten und/oder verifizierten konstruktiven Lösungen bzw. Teilen und Baugruppen hiervon, den sogenannten Lösungselementen, zum Zwecke einer einfachen, schnellen und/oder ressourcenschonenden Konstruktion von neuen industriellen Erzeugnissen wie Maschinen, Werkzeugen, Automaten, industriellen Anlagen o. dgl. In diesem Zusammenhang ist es wesentlich, dass vorbekannte Lösungselemente identifiziert bzw. aufgefunden werden, damit diese bzw. die sie charakterisierenden oder definierenden Konstruktionsdaten oder Modelle im Anschluss als oder für einen Teil des Industrieerzeugnisses wiederverwendet werden können. Die Wiederverwendung von Lösungselementen kann vollautomatisch, (teil-)automatisiert oder manuell erfolgen.

Besonders bevorzugt betrifft die vorliegende Erfindung ein Verfahren zum Auffinden von Lösungselementen durch eine Suche auf Basis eines Suchprofils, wobei das Suchprofil aus mindestens einem Suchmerkmal zur Charakterisierung einer möglichen Eigenschaft eines Lösungselements und einer zugeordnete Merkmalsausprägung zur Spezifizierung des Suchmerkmals besteht oder diese aufweist.

Neben offensichtlichen organisatorischen und ökonomischen Vorteilen bietet die Wiederverwendung von Lösungselementen technische Vorteile in Bezug auf die mit diesen Lösungselementen konstruierten industriellen Erzeugnissen, beispielsweise durch eine verbesserte Zuverlässigkeit aufgrund der Nutzung bereits bewährter Lösungen und/oder durch einen verringerten Materialeinsatz, da Lösungselemente in der Regel bereits in entsprechender Weise optimiert wurden. Die Verwendung von Lösungselementen führt also direkt zu einem technisch ausgereifteren industriellen Erzeugnis.

Durch die fortschreitende Globalisierung sehen sich produzierende Unternehmen aktuell einer verschärften Wettbewerbssituation ausgesetzt. Um vor diesem Hintergrund wirtschaftlich erfolgreich zu bleiben, streben Unternehmen neben üblichen Rationalisierungs- und Einsparungsmaßnahmen insbesondere einen frühen Markteintritt (Time-To-Market) neu entwickelter Produkte an, um eine Vergrößerung des Marktanteils und somit einen hohen Absatz zu bewirken. Die damit unmittelbar verbundene Notwendigkeit verkürzter Durchlaufzeiten bzw. Innovationszyklen geht dabei zwangsläufig mit hohen Anforderungen hinsichtlich der Organisation bzw. Verwaltung von Daten und/oder Dokumenten während der Produktentwicklung einher.

Vor diesem Hintergrund sind aus dem Stand der Technik sogenannte Produktdatenmanagement-Systeme (PDM-Systeme) bekannt, die zum Gegenstand haben, produktdefinierende, -repräsentierende oder -präsentierende Daten und/oder Dokumente als Ergebnis der Produktentwicklung zu speichern, zu verwalten und insbesondere auch nach Ablauf des Produktlebenszyklus weiterhin zur Verfügung zu stellen.

Im Zusammenhang mit einer effizienten bzw. zeitoptimierten Produktentwicklung soll insbesondere der Einsatz von PDM-Systemen ermöglichen, durch eine gezielte Wiederverwendung von Lösungselementen die Effektivität der Produktentwicklung zu steigern, insbesondere sodass Doppelentwicklungen bzw. Entwicklungskosten infolge aufwendiger Tests bzw. Prototypenkonstruktionen (Prototyping) vermieden werden.

Bisher bekannt sind Verfahren zum Auffinden von Lösungselementen, die entweder ausschließlich auf Basis geometrischer Suchkriterien oder ausschließlich auf Basis von Produktspezifikationen operieren. Derartige Auffindungsverfahren sind oftmals mit dem Nachteil verbunden, dass funktional geeignete bzw. zielführende Lösungselemente bereits aufgrund - mitunter geringfügiger - geometrischer Abweichungen nicht vom Suchprofil erfasst werden und somit von der gewünschten Wiederverwendung im Rahmen aktueller Konstruktionsaufgaben ausgeschlossen sind. Dies führt - wie bereits erwähnt - neben vermeidbaren Kosten im Rahmen von Doppelentwicklungen insbesondere zu einem verspäteten Markteintritt neu entwickelter Produkte, einhergehend mit einer Reduzierung der Verkaufszahlen und mitunter erheblichen Rentabilitätseinbußen.

Aufgabe der vorliegenden Erfindung ist es daher, ein Verfahren, ein System, eine Verwendung sowie ein Computerprogrammprodukt anzugeben, wodurch ein effizientes und/oder anwenderfreundliches und/oder ressourcensparendes Auffinden von Lösungselementen ermöglicht wird.

Diese Aufgabe wird durch ein System gemäß Anspruch 1, eine Verwendung gemäß Anspruch 8, ein Verfahren gemäß Anspruch 9, oder ein Computerprogrammprodukt gemäß Anspruch 15 gelöst. Vorteilhafte Weiterbildungen sind Gegenstand der Unteransprüche.

Die vorliegende Erfindung betrifft insbesondere Verbesserungen beim Auffinden von Lösungselementen, vorzugsweise in Form von technischen Bauteilen oder Baugruppen eines industriellen Erzeugnisses, insbesondere zur Verwendung in einem CAD-System, für die Konstruktion, die Konfiguration und/oder automatisierte Herstellung. Vorzugsweise wird das Auffinden bzw. die Suche unter Berücksichtigung der technischen Anforderungen bzw. Hintergründe optimiert, wodurch das unter Verwendung des oder der aufgefundenen Lösungselemente hergestellte oder herstellbare industrielle Produkt verbessert werden kann. Zu diesen Verbesserungen führt beispielsweise, dass mit der vorliegenden Erfindung geeignetere oder auf sonstige Weise beim Einsatz für die Konstruktion des industriellen Erzeugnisses vorteilhafte Lösungselemente besser, effizienter oder überhaupt aufgefunden werden können.

Beim vorschlagsgemäßen Auffinden von bzw. bei der Suche nach Lösungselementen ist besonders bevorzugt vorgesehen, dass ein Suchprofil bestehend aus mindestens einem Suchmerkmal zur Charakterisierung einer möglichen Eigenschaft eines der Lösungselemente und eine zugeordnete Suchmerkmalsausprägung zur Spezifizierung des Suchmerkmals bereitgestellt bzw. verwendet werden. Besonders bevorzugt werden Lösungselemente mittels einer automatisierten Suche aufgefunden, wobei die automatisierte Suche auf Basis eines Suchprofils erfolgt.

Weiter ist bevorzugt, dass das vorschlagsgemäße System mindestens eine Datenverarbeitungseinrichtung zur Verarbeitung des Suchprofils sowie eine Speichereinrichtung, insbesondere Datenbank, aufweisend zu dem Lösungselement korrespondierende Objektprofile aufweist.

Weiter ist bevorzugt, dass das Suchprofil mindestens ein Suchmerkmal zur Charakterisierung einer möglichen Eigenschaft eines Lösungselements und eine diesen bzw. dem jeweiligen Suchmerkmal zugeordnete Suchmerkmalsausprägung zur Spezifizierung des Suchmerkmals aufweist.

Unter dem Begriff "Lösungselement", wie er im Rahmen der vorliegenden Erfindung verwendet wird, ist vorzugsweise ein Bauteil eines technischen Komplexes bzw. industriellen Produkts oder eine Anordnung mehrerer Bauteile und/oder eine Baugruppe bzw. ein dieses/diese repräsentierendes Modell oder repräsentierender Datensatz aufweisend entsprechende Konstruktionsdaten zu verstehen, das bzw. die eine bewährte Lösung zur Erfüllung einer technischen Funktion darstellt bzw. darstellen. Diese bewährte Lösung kann sowohl durch elementare, beispielsweise herkömmliche Maschinenelemente (Schraube, Welle-Nabe-Verbindung etc.) oder Baugruppen, als auch durch vergleichsweise komplexe Einrichtungen, beispielsweise Systeme bestehend aus mehreren mechanischen, elektromechanischen, elektrischen und/oder elektronischen Bauteilen bzw. Baugruppen realisiert sein. Insbesondere ist ein Lösungselement eine Vielzahl bzw. Kaskade von technischen Komponenten, die zusammen ein Industrieerzeugnis oder ein Teil hiervon bilden. So ermöglichen Lösungselemente im Sinne der vorliegenden Erfindung vorzugsweise eine gezielte Wiederverwendung bewährter technischer Komponenten bzw. Lösungen im Rahmen der Produktentwicklung.

Ein "Suchprofil" im Sinne der vorliegenden Erfindung ist vorzugsweise eine Zusammenstellung eines oder mehrerer Suchmerkmale, auch Suchkriterien genannt, vorzugsweise repräsentierend bzw. charakterisierend technische Eigenschaften bzw. Produkteigenschaften von zu ermittelnden Lösungselementen.

Mit anderen Worten besteht ein Suchprofil aus einem oder mehreren Suchmerkmalen. Die Suchmerkmale sind vorzugsweise Eigenschaften, nach denen Merkmale von Objekten bzw. Lösungselementen gesucht werden oder werden können. Suchmerkmale, für die im Suchprofi Suchmerkmalsausprägungen enthalten sind, werden vorzugsweise als Suchbedingung zum Finden von Lösungselementen verwendet. Suchmerkmale, für die im Suchprofil keine Suchmerkmalsausprägung(en) enthalten sind, beeinflussen die Suche vorzugsweise nicht.

Vorzugsweise charakterisiert ein "Suchmerkmal" eine mögliche Eigenschaft des Lösungselements bzw. der Baugruppe oder des Bauteils und/oder repräsentiert eine Spezifikation bzw. Produktanforderung an ein aufzufindendes Lösungselement. Suchmerkmale, beispielsweise in Form von Produktspezifikationen, im Sinne der vorliegenden Erfindung können dabei geometrische Eigenschaften, besonders bevorzugt eine Gestalt bzw. Topographie, Leistungsgrößen, Werksstoffe sowie elektrische, physikalische und/oder chemische Eigenschaften sowie logistische und/oder warenwirtschaftliche und/oder fertigungsspezifische und/oder vertriebsrelevante Aspekte sein oder definieren.

Bei Suchmerkmalen im Sinne der vorliegenden Erfindung handelt es sich also bevorzugt um Eigenschaften (Attribute) von Objekten (Lösungselementen), z. B. einer Länge, ein Durchmesser, eine Leistung und/oder ein (3D)-Gestaltung.

Suchmerkmale im Sinne der vorliegenden Erfindung werden vorzugsweise in zwei Gruppen eingeteilt.

Eine erste Gruppe sind konkrete, spezifische, explizite, eindeutige, messbare und/oder direkt abbildbare (Such-) Merkmale. Hierzu zählen Suchmerkmale, deren zugeordnete Suchmerkmalsausprägungen auf Skalen direkt abbildbar sind. Bei den Skalen kann es sich um nominale, ordinale und/oder kardinale Skalen handeln. Mit anderen Worten handelt es sich um solche Suchmerkmale, deren Suchmerkmalsausprägung (direkt) eingegeben oder aus einer Liste ausgewählt werden kann. Der Wert einer solchen Suchmerkmalsausprägung entspricht einem Wert, der gespeichert wird oder werden kann. Beispiele hierzu sind technische und funktionale Eigenschaften sowie geometrische Dimensionen von Lösungselementen. Derartige Suchmerkmale werden fortan nicht-geometrische Suchmerkmale genannte. Nichtgeometrische Suchmerkmale sind vorzugsweise solche Suchmerkmale, die keine Transformation einer Topographie oder Gestalt eines Lösungselements sind und/oder nicht auf einer solchen Transformation basieren.

Eine zweite Gruppe von Suchmerkmalen sind sogenannte abstrakte, umfassende, implizite, zu interpretierende, nicht (direkt) messbare und/oder nicht (direkt bzw. auf einer Skala) abbildbare Merkmale. Bei diesen Suchmerkmalen ist es nicht möglich, korrespondierende Suchmerkmalsausprägungen auf Skalen - insbesondere nominalen, ordinalen und/oder kardinalen Skalen - direkt bzw. ohne Transformation abzubilden. Die Merkmalsausprägungen basieren hierbei vorzugsweise nicht auf einer direkten bzw. expliziten Eingabe oder Auswahl, sind also vorzugsweise nicht direkt als Wert eingebbar oder aus einer Liste von Werten auswählbar. Die Suchmerkmalsausprägungen korrespondieren zu oder basieren bevorzugt vielmehr auf einer Transformation. Insbesondere basieren Suchmerkmalsausprägungen zu derartigen Suchmerkmalen auf einem impliziten Vorgang wie einer 3D-Modellierung bzw. einer Transformation eines 3D-Modells, vorzugsweise eines Lösungselements. Bei einem derartigen Suchmerkmal bzw. der derartigen Suchmerkmalsausprägung kann es sich um eine 3D-Gestalt als Ganzes oder um 3D-Teilgeometrien (Ausschnitte) der 3D-Gestalt bzw. um Transformation hiervon handeln. Derartige Suchmerkmale werden fortan geometrische Suchmerkmale genannt. Geometrische Suchmerkmale sind vorzugsweise solche Suchmerkmale, die eine Transformation einer Topographie oder Gestalt eines Lösungselements sind oder auf einer solchen Transformation basieren.

Unter dem Begriff "Suchmerkmalsausprägung" ist im Sinne der vorliegenden Erfindung vorzugsweise eine bestimmte (Werte-)Angabe zur Spezifizierung des zugeordneten Suchmerkmals zu verstehen. Mit anderen Worten sind Suchmerkmalsausprägungen vorzugsweise Werte, Wertebereich oder Datensätze, mit denen ein Merkmal eines Objekts bzw. Lösungselements beschrieben wird oder ist.

Vorzugsweise ist eine Suchmerkmalsausprägung eine quantitative Spezifizierung bzw. (Werte-) Angabe eines zugeordneten Suchmerkmals, die insbesondere dimensionsbehaftet und/oder messbar ist, und/oder eine qualitative bzw. kategoriale (Werte-)Angabe bzw. eine funktionale Spezifizierung des zugeordneten Suchmerkmals bzw. eine semantische Zuordnung des Suchmerkmals. Kategorial bedeutet vorzugsweise eine Bauteilkategorie, Baugruppen-Kategorie oder sonstige Kategorie von industriellen Erzeugnissen oder Teilen hiervon repräsentierend und/oder im statistischen Sinn nominalskaliert, ordinalskaliert oder metrisch mit nur wenigen Ausprägungen.

Das Suchprofil weist vorzugsweise ein oder mehrere Suchmerkmale auf, zu denen jeweils Suchmerkmalsausprägungen vorliegen. Das Suchprofil kann also paarweise zueinander zugeordnete Suchmerkmale und Suchmerkmalsausprägungen aufweisen oder hierdurch gebildet sein. Hierbei entspricht ein Suchmerkmal vorzugsweise einer Kategorie oder Variable und die zugeordnete Suchmerkmalsausprägung konkretisiert diese, beispielsweise in Form eines Parameters, Werts, Wertebereichs oder dergleichen.

Die vorliegende Erfindung betrifft einerseits ein System zum Auffinden von technischen Lösungselementen, vorzugsweise von Bauteilen oder Baugruppen eines industriellen Erzeugnisses, mittels einer automatisierten Suche, insbesondere zur Verwendung in einem CAD-System für die Konstruktion und/oder automatisierte Herstellung eines industriellen Erzeugnisses, mittels eines Suchprofils.

Das System weist mindestens eine Datenverarbeitungseinrichtung zur Verarbeitung des Suchprofils und eine Speichereinrichtung, insbesondere Datenbank, aufweisend zu den Lösungselementen korrespondierende Objektprofile auf.

In einem Aspekt der vorliegenden Erfindung ist, insbesondere bei dem vorschlagsgemäßen System und/oder Verfahren, vorgesehen, dass das Suchmerkmal und die zugeordnete Suchmerkmalsausprägung zu einer konkreten, spezifischen, expliziten, eindeutigen, messbaren und/oder direkt - insbesondere auf einer Skala - abbildbaren Eigenschaft eines Lösungselements korrespondiert und/oder zu einer Eigenschaft korrespondiert, die nicht zu einer geometrischen Topographie (auch Gestalt genannt) korrespondiert. Solche Suchmerkmale werden im Folgenden auch "funktionale Suchmerkmale" bzw. "nicht-geometrische Suchmerkmale" genannt, weshalb der Begriff "funktionales Suchmerkmal" durch ein oder mehrere Merkmale der folgenden Merkmalskombination ergänzt oder ersetzt werden kann: "konkretes, spezifisches, explizites, eindeutiges, messbares, direkt - insbesondere auf einer Skala - abbildbares Suchmerkmal und/oder Suchmerkmal, das nicht zu einer geometrischen Topographie korrespondiert".

Alternativ oder zusätzlich kann der Begriff "(funktionale) Suchmerkmalsausprägung" durch ein oder mehrere Merkmale der Merkmalskombination "konkrete, spezifische, explizite, eindeutige, messbare, direkt - insbesondere auf einer Skala - abbildbare Suchmerkmalsausprägung und/oder Suchmerkmalsausprägung, die nicht zu einer geometrischen Topographie korrespondiert" ersetzt oder ergänzt werden.

Wenn im Folgenden von einem "funktionalen Suchmerkmal" die Rede ist, betrifft oder ist dies also insbesondere ein nicht die Topographie, Form und/oder das Aussehen bzw. die Gestalt betreffendes und/oder nicht direkt auf einer Skala abbildbares Suchmerkmal. Alternativ oder zusätzlich ist ein funktionales Suchmerkmal ein solches Suchmerkmal, das bzw. dessen Suchmerkmalsausprägung auf einer Skala vorzugsweise direkt abbildbar ist.

Weiter weist das System vorzugsweise ein Suchmodul auf, das dazu ausgebildet ist, mit einer Suche nach der Suchmerkmalsausprägung Abstandswerte zu ermitteln, die Ähnlichkeiten oder Unähnlichkeiten des Suchprofils mit den jeweiligen Objektprofilen repräsentieren.

Die Abstandswerte können im Anschluss zur Anordnung von Lösungselement-Äquivalenten in einer Benutzeroberfläche, zur Auswahl bestimmter Lösungselement-Äquivalente auf der Benutzeroberfläche und/oder zur Zentrierung eines ausgewählten oder auswählbaren Lösungselement-Äquivalents auf der Benutzeroberfläche verwendet werden.

Das (funktionale) Suchmerkmal bzw. die zugeordnete (funktionale bzw. nichtgeometrische) Suchmerkmalsausprägung korrespondiert also vorzugsweise zu einer konkreten Eigenschaft eines oder einer Gruppe von Lösungselementen wie einer physikalischen Eigenschaft. Alternativ oder zusätzlich charakterisiert das Suchmerkmal bzw. die zugeordnete Suchmerkmalsausprägung eine/die Eigenschaft explizit. Es handelt sich also vorzugsweise um nicht-aggregierte oder nichtabstrahierte Kenngrößen.

Das (funktionale bzw. nicht-geometrische bzw. auf einer Skala abbildbare) Suchmerkmal bzw. die zugeordnete Suchmerkmalsausprägung ist/sind bevorzugt spezifisch für Lösungselemente oder eine Gruppe von Lösungselementen.

Das (funktionale bzw. nicht-geometrische bzw. auf einer Skala abbildbare) Suchmerkmal bzw. die zugeordnete Suchmerkmalsausprägung ist/sind vorzugweise eindeutig für ein Lösungselement bzw. eine Gruppe von Lösungselementen.

Das (funktionale bzw. nicht-geometrische bzw. auf einer Skala abbildbare) Suchmerkmal bzw. die zugeordnete Suchmerkmalsausprägung ist/sind vorzugweise messbar, direkt - insbesondere auf einer Skala - abbildbar und/oder korrespondiert / korrespondieren nicht zu einer die geometrischen Topographie (bzw. Gestalt) des Lösungselements, also insbesondere nicht zu einer abstrakten Kenngröße, die zu einer geometrischen Topographie des Lösungselements korrespondiert.

Charakteristisch für (funktionale bzw. nicht-geometrische bzw. auf einer Skala abbildbare) Suchmerkmale dieses Aspekts ist vorzugsweise, dass Suchmerkmalausprägungen eines konkreten Suchmerkmals bevorzugt auf nominalen, ordinalen oder kardinalen Skalen direkt (ohne Transformation) abbildbar sind. Das heißt, der Wert, der für eine Suchmerkmalsausprägung eingegeben, aus einer Liste ausgewählt oder aus dem Kontext ermittelt wird/werden kann, insbesondere mit dem oder durch das System, entspricht dem Wert, der gespeichert und/oder verwendet wird. Beispiele sind hier technische und funktionale Eigenschaften und/oder geometrische Dimensionen von Lösungselementen.

Eine geometrische Topographie oder Gestalt ist vorzugsweise die geometrische Struktur, insbesondere Oberflächenstruktur oder Außenansicht, eines Lösungselements oder eines Teils eines Lösungselements. Es kann sich hierbei um ein Modell handeln oder ein Modell kann die geometrische Topographie bzw. Gestalt repräsentieren. Bei dem Modell handelt es sich vorzugsweise um ein 3D-Modell. Es sind jedoch auch andere Modelle möglich. Eine Transformation einer geometrischen Topographie oder Gestalt bzw. eines Modells ist vorzugsweise ein Verfahren bzw. dessen Ergebnis, das charakteristisch für die geometrischen Topographie oder Gestalt bzw. das Modell ist oder diese(s) repräsentiert. Hierbei ist es nicht nötig, dass aus der Transformation das Modell zurückgewonnen werden kann. Vielmehr führt oder ist die Transformation vorzugsweise eine abstrahierte und/oder unumkehrbare Repräsentation von strukturellen Eigenschaften, von Oberflächeneigenschaften, des Aussehens, also der Gestalt bzw. Topographie.

Die vorliegende Erfindung betrifft in einem weiteren, auch unabhängig realisierbaren Aspekt bevorzugt ein System und ein korrespondierendes Verfahren, bei denen abstrakte, umfassende, implizite, zu interpretierende, nicht messbare, nicht direkt - insbesondere auf einer Skala - abbildbare, und/oder zu einer geometrischen Topographie, Form bzw. dem Aussehen bzw. der Gestalt des Lösungselements korrespondiere Suchmerkmale und Suchmerkmalsausprägungen verwendet werden bzw. zugrundeliegen. Solche Suchmerkmale werden im Folgenden auch "geometrische Suchmerkmale" und korrespondierende Suchmerkmalsausprägungen "geometrische Suchmerkmalsausprägungen" genannt.

Unter dem Begriff "abstraktes bzw. geometrisches Suchmerkmal" wird im Folgenden also vorzugsweise ein "abstraktes, umfassendes, implizites, zu interpretierendes, nicht messbares, nicht direkt - insbesondere auf einer Skala - abbildbares, und/oder zu einer geometrischen Topographie eines Lösungselements bzw. einer Gruppe von Lösungselementen korrespondierendes Suchmerkmal" verstanden oder zusammengefasst. Alternativ oder zusätzlich wird unter dem Begriff (abstrakte bzw.) "geometrische Suchmerkmalsausprägung" eine "abstrakte, umfassende, implizite, zu interpretierende, nicht messbare, nicht - insbesondere auf einer Skala - direkt abbildbare, und/oder zu einer geometrischen Topographie eines Lösungselements bzw. einer Gruppe von Lösungselementen korrespondierende Suchmerkmalsausprägung" verstanden oder zusammengefasst. Die Begriffe "geometrisches Suchmerkmal" bzw. "geometrische Suchmerkmalsausprägung" können entsprechend (teilweise) ersetzt werden oder ergänzt werden oder umgekehrt.

Bei abstrakten bzw. geometrischen Suchmerkmalen ist es vorzugsweise nicht möglich, alle vorstellbaren Suchmerkmalausprägungen direkt (ohne Transformation) einzugeben bzw. aus einer vordefinierten Liste auszuwählen. Die (geometrischen) Suchmerkmalausprägungen entstehen daher nicht durch explizite Eingabe oder Auswahl, sondern bevorzugt durch einen impliziten Vorgang, z.B. Skizzieren eines 3D-Modells oder Auswahl eines Teils, dessen 3D-Modell Ausgangspunkt für eine Suche ist. Ein Algorithmus transformiert diesen impliziten Vorgang vorzugsweise in eine geometrische bzw. abstrakte Suchmerkmalausprägung. Beispiele sind die 3D-Gestalt als Ganzes, oder (beliebig kleine) 3D-Teilgeometrien (Ausschnitte) der gesamten 3D-Gestalt. Generell kann jede Gestalt beliebige Formen und Formvarianten annehmen.

Kurz gesagt korrespondiert ein geometrisches Suchmerkmal vorzugsweise zu einer Transformation eines 3D-Modells eines Lösungselements oder eines Teils eines Lösungselements, während ein nicht-geometrisches Suchmerkmal vorzugsweise nicht zu einer Transformation korrespondiert, insbesondere nicht zu einer Transformation eines Modells eines Lösungselements. Eine geometrische Suchmerkmalsausprägung ist vorzugsweise eine Transformation eines 3D-Modells eines Lösungselements oder eines Teils eines Lösungselements, während eine nicht-geometrisches Suchmerkmalsausprägung vorzugsweise keine Transformation ist, insbesondere keine Transformation eines Modells eines Lösungselements, und nicht auf einer (solchen) Transformation basiert.

In einem Aspekt wird/ist die Suche jedenfalls auf Basis eines geometrischen Suchmerkmals bzw. einer korrespondierenden geometrischen Suchmerkmalsausprägung ausgeführt wird oder ausführbar.

Das geometrische Suchmerkmal betrifft vorzugsweise eine geometrische Topographie eines Lösungselements mit einer korrespondierenden geometrischen Suchmerkmalsausprägung, die eine geometrische Topographie des Lösungselements charakterisiert.

Die geometrische Topographie ist vorzugsweise das Erscheinungsbild oder die Grundform, Außenansicht oder schlicht Form eines korrespondierenden Lösungselements.

Die geometrische Suchmerkmalsausprägung repräsentiert hierbei vorzugsweise das Erscheinungsbild bzw. die Gestalt, weiter bevorzugt in Form eines oder einer Gruppe von automatisch generierten oder generierbaren Kennwerten, insbesondere in Form eines oder mehrerer Vektoren. Hierbei können die Kennwerte durch Transformation des Lösungselements bzw. eines 3D-Modells des Lösungselements erzeugt werden oder erzeugbar sein.

Das geometrische Suchmerkmal oder die geometrische Suchmerkmalsausprägung sind vorzugsweise zur Bestimmung der Ähnlichkeit zwischen 2D- oder 3D-Formen von Lösungselementen ausgebildet.

In einem bevorzugten Ausführungsbeispiel werden zur Ermittlung der Ähnlichkeit zwischen den zwei 3D-Formen von Lösungselementen bzw. entsprechenden geometrischen Suchmerkmalen die Kennwerte bzw. geometrische Suchmerkmalsausprägungen entsprechender 2D-Formen verglichen, die zu unterschiedlichen Ansichten der jeweiligen 3D-Form der Lösungselemente bzw. entsprechenden geometrischen Suchmerkmalen korrespondieren.

Die Erfindung kann als integrierte oder separate Komponente von oder für CAD- und/oder PDM-Systemen eingesetzt werden. Die Erfindung ist jedoch bevorzugt unabhängig von CAD- bzw. PDM-Systemen realisierbar und einsetzbar.

Die Lösungselemente können beispielsweise durch Daten in RAW-Formaten, einschließlich allgemeiner Formate wie Punkt-Wolken und triangulierte Polygon-Suppen repräsentiert sein.

Die Suche nach Lösungselementen durch 3D-Formsuche direkt mit CAD-Modellen hat sich als zu komplex, zu wenig differenziert und zu rechenintensiv gezeigt. Daher werden in der vorliegenden Erfindung vorzugsweise die geometrischen Suchmerkmale bzw. Suchmerkmalsausprägungen in Form einer geometrischen Topographie oder diese repräsentierenden Kennwerten wie Vektoren o. dgl. verwendet.

Zur Ermittlung der geometrischen Suchmerkmale bzw. Suchmerkmalsausprägungen werden in einem Aspekt der vorliegenden Erfindung ein 3D-Modell eines Lösungselements in eine Gruppe von 2D-Projektionen zerlegt. Diese werden dann verglichen bzw. transformiert, um Kennwerte zu erzeugen. Dies kann sowohl für fertige, zu suchende Lösungselemente, insbesondere korrespondierend zu oder repräsentiert durch Objektprofile, als auch für die Suchkriterien, also zur Bestimmung von geometrischen Suchmerkmalen bzw. Suchmerkmalsausprägungen als auch von geometrischen Objektmerkmalen bzw. Objektmerkmalsausprägungen zutreffen.

Dieser Vorgehensweise liegt die Idee zugrunde, dass eine Gruppe von 2D-Projektionen viele Schlüsselmerkmale der meisten 3D-CAD-Modelle bzw. der Topographie des jeweiligen Lösungselements erfassen und folglich die Komplexität reduziert werden kann, bei Aufrechterhaltung einer Suchbarkeit, Auswertbarkeit bzw. Erkennbarkeit. Die 2D-Projektionen oder davon abgeleitete Größen können (geometrische) Suchmerkmalsausprägungen bzw. Objektmerkmalsausprägungen sein oder bilden.

In bevorzugten Ausführungsformen werden die 2D-Projektionen von einer Voxel-Darstellung bzw. Repräsentation des Modells bzw. Lösungselements abgeleitet.

Vorzugsweise werden in den 2D-Projektionen bestimmte charakteristische Formmerkmale erfasst. Hierzu kann/können die diskrete Fourier-Transformation und/oder die Harr Wavelet-Transformation oder sonstige Transformationen eingesetzt werden.

Vorzugsweise wird ein Vergleich der Geometrie eines Paares von dreidimensionalen Modellen der Lösungselemente dadurch durchgeführt, dass - bevorzugt entsprechend erzeugte - geometrische Objektmerkmale bzw. Objektmerkmalsausprägungen verglichen werden mit - bevorzugt entsprechend erzeugten - geometrischen Suchmerkmalen oder Suchmerkmalsausprägungen oder anderen geometrischen Objektmerkmalen bzw. Objektmerkmalsausprägungen.

Insbesondere wird eine Vielzahl von hierarchischen 2D-Projektionen berechnet für die jeweiligen dreidimensionalen Lösungselemente. Ferner werden Kennwerte der entsprechenden zweidimensionalen hierarchischen Darstellungen zum Vergleich zweier Lösungselemente mit der genannten Modelle genutzt, wodurch ein Wert erzeugt werden kann, der dem Betrag der geometrischen Differenz zwischen diesen entspricht, im Folgenden "Ähnlichkeitsziffer" genannt.

Vorzugsweise umfassen die dreidimensionalen Lösungselemente, die bevorzugt in Form von Modellen vorliegen oder durch Modelle gebildet oder repräsentiert sind oder werden, eine oder mehrere parametrische Flächen, polygonale Flächen, Maschen-Approximationen und/oder Punktwolke-Approximationen und/oder Kombinationen davon auf, von denen mindestens eine geometrische oder räumliche Eigenschaft von lokalisierten Bereichen der Flächen extrahiert werden und als Kenngröße verwendet werden kann.

Der Schritt des Berechnens der Kenngrößen umfasst vorzugsweise das Berechnen zweidimensionaler Transformationen aus einer Vielzahl von zweidimensionalen Projektionen jedes der dreidimensionalen Modelle bzw. Lösungselemente auf einer Vielzahl von finiten zweidimensionalen Ebenen. Dies kann durch folgende Schreitte erfolgen:

Einpassen eines dreidimensionalen Gitters auf das dreidimensionale Modell / Lösungselement; identifizieren einer Teilmenge von Gitterzellen des dreidimensionalen Gitters, die eine Oberflächen oder genäherte Oberfläche schneidet; Assoziieren eines Werts mit jeder identifizierten Gitterzelle, der ermittelt wird durch Ableitung geometrischer oder räumlicher Eigenschaften von Teilen der mehreren Oberflächen und Oberflächennäherungen, von identifizierten Gitterzellen, die innerhalb oder benachbart zu identifizierten Gitterzelle liegen; Projizieren der Werte der identifizierten Gitterzellen auf eine Mehrzahl von zweidimensionalen Ebenen zur Erzeugung einer Vielzahl von zweidimensionalen Gittern; und Anwendung einer zweidimensionalen Transformation auf jedes zweidimensionale Gitter.

Das Suchprofil weist mindestens ein Suchmerkmal zur Charakterisierung einer möglichen Eigenschaft eines oder mehrerer der Lösungselemente und eine zugeordnete Suchmerkmalsausprägung zur Spezifizierung des Suchmerkmals auf. Bei der Suchmerkmalsausprägung kann es sich um einen oder mehrere Kennwerte handeln, die durch das Lösungselement oder auf Basis des Lösungselements, insbesondere in der beschriebenen Weise, erzeugbar sind oder erzeugt werden.

Gemäß einem auch unabhängig realisierbaren Aspekt der vorliegenden Erfindung weist das System ein Suchprofilerweiterungsmodul auf, das dazu ausgebildet ist, mittels eines oder mehrerer vorgegebener Suchmerkmale und/oder Suchmerkmalsausprägungen ein Erweiterungsmerkmal und eine diesem zugeordnete Erweiterungsmerkmalsausprägung zu ermitteln und das Suchprofil um die Erweiterungsmerkmalsausprägung zu ergänzen. Hierdurch bildet die Erweiterungsmerkmalsausprägung eine zusätzliche Suchmerkmalsausprägung des Suchprofils. Hierdurch kann der technische Vorteil erreicht werden, dass die Suche effizienter, schneller und effektiver da zielgerichteter wird, wodurch mehr oder besser geeignete Lösungselemente gefunden und für die Konstruktion des industriellen Erzeugnisses verwendet werden. Hierdurch wird beispielsweise die Zuverlässigkeit des Erzeugnisses verbessert und Mehraufwand in der Konstruktionsphase vermieden.

Gemäß einem weiteren, auch unabhängig realisierbaren Aspekt der vorliegenden Erfindung weist das Suchprofil mindestens zwei Suchmerkmale auf, wobei mindestens eines dieser Suchmerkmale ein geometrisches Suchmerkmal mit einer korrespondierenden geometrischen Suchmerkmalsausprägung ist, die eine geometrische Eigenschaft charakterisiert. Weiter ist mindestens ein anderes der Suchmerkmale ein funktionales Suchmerkmal mit einer korrespondierenden funktionalen Suchmerkmalsausprägung, die eine funktionale Eigenschaft charakterisiert. Zudem ist vorgesehen, dass das System ein Suchmodul aufweist, das dazu ausgebildet ist, eine Suche gemeinsam nach der geometrischen Suchmerkmalsausprägung und der funktionalen Suchmerkmalsausprägung in derselben Speichereinrichtung bzw. Datenbank durchzuführen. Hierdurch können Abstandswerte ermittelt werden, die Ähnlichkeiten oder Unähnlichkeiten des Suchprofils mit den jeweiligen Objektprofilen repräsentieren. Auf diese Weise können zuvor separat durchgeführte Suchen in synergistischer Weise kombiniert werden, so dass Lösungselemente bzw. Objektprofile ganzheitlich und nicht schrittweise bewertet werden, wodurch im Ergebnis mehr Lösungselemente zur Verfügung stehen und erst in einem weiteren Schritt über mögliche Kompromisse oder Änderungen das geeignetste Lösungselement identifiziert und verwendet werden kann.

Gemäß einem weiteren, auch unabhängig realisierbaren Aspekt der vorliegenden Erfindung weist das System ein Gewichtungsmodul auf, das dazu ausgebildet ist, eines oder mehrere der Suchmerkmale und/oder Suchmerkmalsausprägungen und/oder ein oder mehrere hiermit ermittelte Ergebnisse, insbesondere Ähnlichkeitsziffern, über einen oder mehrere die Relevanz des jeweiligen Suchmerkmals repräsentierenden Relevanzoperator zu gewichten, wodurch die Ermittlung von Ähnlichkeiten oder Unähnlichkeiten des Suchprofils mit den jeweiligen Objektprofilen repräsentierenden Abstandswerten beeinflusst wird. Auf diese Weise können insbesondere Vorteile dahingehend erreicht werden, dass für das zu konstruierende industrielle Erzeugnis relevantere Suchmerkmale priorisiert werden. Hierdurch kann eine effizientere Auswahl von geeigneteren Lösungselementen erreicht werden.

Vorzugsweise weist das System eine Speichereinrichtung, insbesondere eine Datenbank, auf, in der mehrere Objektprofile hinterlegt sind, die zur Repräsentation von Lösungselementen ausgebildet sind. Ferner ist das System bevorzugt dazu ausgebildet, das Suchprofil mit den Objektprofilen und/oder die Objektprofile untereinander zu vergleichen. Hierdurch werden vorzugsweise Abstandswerte zwischen dem Suchprofil und den Objektprofilen und/oder zwischen den jeweiligen Objektprofilen ermittelt. Diese Abstandswerte korrespondieren vorzugsweise zu Gemeinsamkeiten und/oder Unterschieden zwischen dem Suchprofil und den Objektprofilen und/oder den Objektprofilen untereinander. Hierdurch kann ein geeignetes Lösungselement besonders effizient und effektiv ausgewählt und/oder für die Konstruktion des industriellen Erzeugnisses in einem CAD-System verwendet werden.

Weiter ist bevorzugt, dass das System eine Anzeigeeinrichtung aufweist und zur Anzeige einer Ergebnisoberfläche mit der Anzeigeeinrichtung ausgebildet ist. Auf der Ergebnisoberfläche werden mehrere, jeweils ein Lösungselement repräsentierende Lösungselement-Äquivalente und mindestens ein das Suchprofil repräsentierendes Suchprofil-Äquivalent dargestellt. Die Lösungselement-Äquivalente und das Suchprofil-Äquivalent werden hierbei automatisch auf Basis der ermittelten Abstandswerte zueinander angeordnet, so dass Abstände zwischen den Lösungselement-Äquivalenten und dem Suchprofil-Äquivalent den Abstandswerten entsprechen oder von diesen abgeleitet sind. Auf diese Weise können geeignete Lösungselemente besonders effizient ausgewählt und in einem CAD-System für die Konstruktion des industriellen Erzeugnisses verwendet werden.

Gemäß einem weiteren, auch unabhängig realisierbaren Aspekt der vorliegenden Erfindung ist vorgesehen, dass das Suchprofil um mindestens ein dem Suchmerkmal oder der Suchmerkmalsausprägung zugeordnetes Erweiterungsmerkmal ergänzt wird, wobei das Erweiterungsmerkmal als Suchmerkmal mit oder ohne zugeordneter Suchmerkmalsausprägung als Erweiterungsmerkmalsausprägung bereitgestellt wird.

Es hat sich in überraschender Weise gezeigt, dass die vorzugsweise automatische Erweiterung des Suchprofils durch mindestens ein Erweiterungsmerkmal mit oder ohne zugeordnete Erweiterungsmerkmalsausprägung zu einer Verbesserung des Suchverfahrens führt, da auf diese Weise ein effektiveres bzw. zielgerichtetes und/oder automatisiertes Erfassen von Lösungselementen ermöglicht wird. Insbesondere wird die Suche bzw. das Suchprofil basierend auf vorgegebenen Suchmerkmalen bzw. Suchmerkmalsausprägungen automatisch mit weiteren Suchmerkmalen bzw. Suchmerkmalsausprägungen näher spezifiziert, was die Definition einer auf dieser Basis durchzuführenden oder durchführbaren Suche erleichtert, beschleunigt und/oder verbessert. Dies erhöht insgesamt die Anzahl und/oder das Auffinden geeigneter Lösungselemente und trägt somit zu einer effizienteren, zeitoptimierten und/oder ressourcensparenden Produktentwicklung durch die optimierte Wiederverwendung von Lösungselementen bei.

Vorzugsweise beschreibt bzw. repräsentiert ein Suchmerkmal bzw. dessen / die ihm zugeordnete Suchmerkmalsausprägung im Sinne der vorliegenden Erfindung eine Anforderung bzw. Produktspezifikation an ein aufzufindendes Lösungselement. In Abhängigkeit zur Komplexität des neu zu entwickelnden Produkts bzw. Systemelements und der Anzahl relevanter Systemebenen bzw. Lösungselemente steigt im Rahmen des Entwicklungsprozesses auch die Anzahl zu erfüllender Anforderungen bzw. Produktspezifikationen.

In diesem Zusammenhang hat es sich als zweckmäßig erwiesen, Suchmerkmale von Lösungselementen systematisch zu ermitteln bzw. zu gruppieren und anschließend in Form einer klassenspezifischen Gruppe einzelnen Lösungselementen gezielt zuzuordnen.

Alternativ oder zusätzlich können allgemeine Suchmerkmale wie Gestalt, Länge, Höhe, Breite u.dgl. verwendet werden.

Eine klassenspezifische Gruppe - auch Klasse genannt - ist vorzugsweise eine Menge von Lösungselementen, die derselben Klasse von technischen Lösungen, industriellen Produkten oder Teilen hiervon zugehören bzw. zugeordnet sind.

Diese Suchmerkmale und/oder Zuordnungen können abgespeichert werden und/oder eine Datenbank bilden. Dies gestattet ein systematisches Auffinden vor dem Hintergrund einer großen Anzahl vergleichsweise komplexer Lösungselemente.

Unterschiedliche Lösungselemente sind vorzugsweise dadurch charakterisiert, dass sie sich vorzugsweise in zumindest einem Suchmerkmal bzw. in zumindest einer Suchmerkmalsprägung unterscheiden.

Unterschiede zwischen Lösungselementen können auch in einem Identifikator wie einer Teilenummer o. dgl. liegen, sodass die Lösungselemente voneinander unterscheidbar und/oder (eindeutig) identifizierbar sind.

Insbesondere weisen unterschiedliche Lösungselemente als Suchmerkmale bzw. Suchmerkmalsprägungen jeweils unterschiedliche Merkmale bzw. Produktspezifikationen bzw. Anforderungen auf, die in entsprechend unterschiedlichen klassenspezifischen Gruppen zugeordnet sind. Ein erstes Lösungselement weicht also vorzugsweise jedenfalls hinsichtlich des Aufbaus bzw. Inhalts der zugeordneten klassenspezifischen Gruppe von einem zweiten Lösungselement bzw. einem weiteren Lösungselement ab. Hierbei kann eine Abweichung einer Produktspezifikation bzw. Eigenschaft in der entsprechenden klassenspezifischen Gruppe ausreichen.

Alternativ oder zusätzlich können die unterschiedlichen Lösungselemente als Suchmerkmale bzw. Suchmerkmalsprägungen jeweils unterschiedliche Merkmale bzw. Produktspezifikationen oder Produkteigenschaften bzw. Anforderungen aufweisen, die nicht klassenspezifisch sind.

Grundsätzlich können sich unterschiedliche Lösungselemente auch nahezu in allen Suchmerkmalen bzw. Suchmerkmalsausprägungen, vorzugsweise repräsentierend, Produktspezifikationen bzw. Anforderungen bzw. hinsichtlich ihrer Aufbaus bzw. Inhalts der zugeordneten klassenspezifisch Gruppe, gleichen und beispielsweise nur in einer Suchmerkmalsausprägung zu einer Produktspezifikation bzw.

Anforderung unterscheiden, wie es beispielsweise bei Baureihen, die in vielfacher Ausführung in gleichartiger Weise gefertigt werden, der Fall ist.

Unter einem "Erweiterungsmerkmal" ist vorzugsweise ein Suchmerkmal bzw. eine Suchmerkmalsausprägung, vorzugsweise eine Produktspezifikation bzw. Anforderung bzw. Eigenschaft, zu verstehen, das bzw. die zusammen mit dem (vorgegebenen) Suchmerkmal und/oder der (vorgegebenen) Suchmerkmalsausprägung demselben Lösungselement zugeordnet und/oder somit in derselben klassenspezifischen Gruppe des zugeordneten Lösungselements hinterlegt ist. Insbesondere handelt es sich bei dem Erweiterungsmerkmal im Sinne der vorliegenden Erfindung folglich um ein klassenspezifisches Erweiterungsmerkmal. Mit anderen Worten ist ein Erweiterungsmerkmal ein zu demselben Lösungselement korrespondierendes Suchmerkmal, das sich von sonstigen Suchmerkmalen vorzugsweise dadurch unterscheidet, dass es nachträglich ermittelt bzw. ergänzt wird. Abgesehen von dieser Besonderheit handelt es sich bei dem Erweiterungsmerkmal also vorzugsweise um eines oder mehrerer Suchmerkmale zur Charakterisierung eines Lösungselements bzw. zum Vergleich mit Objektmerkmalen zur Ermittlung von Abständen hierzu korrespondierender Lösungselemente.

Ein klassenspezifisches Erweiterungsmerkmal ist vorzugsweise ein Suchmerkmal, das geeignet ist, ein Lösungselement einer spezifischen Klasse von Lösungselementen zu charakterisieren. Eine Klasse von Lösungselementen fasst vorzugsweise Lösungselemente aus einem ähnlichen technischen Gebiet und/oder mit ähnlichen technischen Eigenschaften zusammen.

Vorzugsweise wird das Suchprofil automatisch um das klassenspezifische Erweiterungsmerkmal und, vorzugsweise, eine zu dem klassenspezifischen Erweiterungsmerkmal korrespondierende Erweiterungsmerkmalsausprägung, die eine Suchmerkmalsausprägung sein oder aufweisen kann, ergänzt. Dadurch wird das Suchverfahren effizienter, da auf diese Weise kontextsensitiv bzw. klassenspezifisch relevante Lösungselemente genauer bzw. effizienter erfasst werden.

Insbesondere ist das Erweiterungsmerkmal als Suchmerkmal mit oder ohne zugeordnete Suchmerkmalsausprägung ausgebildet. Insbesondere erfolgt automatisch in Abhängigkeit zur (vorgegebenen) Suchmerkmalsausprägung des zugeordneten Suchmerkmals eine automatische Ermittlung bzw. Ausbildung der zum Erweiterungsmerkmal korrespondierenden Erweiterungsmerkmalsausprägung.

Gemäß einem weiteren, auch unabhängig realisierbaren, Aspekt der vorliegenden Erfindung weist das Suchprofil mindestens zwei Suchmerkmale auf, wobei ein Suchmerkmal ein abstraktes und/oder geometrisches Suchmerkmal mit, vorzugsweise, korrespondierender Suchmerkmalsausprägung und ein anderes Suchmerkmal ein nicht-geometrisches und/oder nicht zu der Topographie korrespondierendes, bzw. funktionales Suchmerkmal mit, vorzugsweise, korrespondierender Suchmerkmalsausprägung ist.

Dies gestattet eine integrative Suche bzw. Ermittlung relevanter Lösungselemente unter gleichzeitiger Berücksichtigung geometrischer und funktionaler Suchmerkmale/Suchkriterien bzw. Produktspezifikationen.

Gemäß einem weiteren, auch unabhängig realisierbaren Aspekt der vorliegenden Erfindung wird das Suchmerkmal und/oder die Suchmerkmalsausprägung und/oder einer Verrechnung oder eines Vergleichs hiermit über einen eine Relevanz des Suchmerkmals repräsentierenden Relevanzoperator gewichtet.

Vorzugsweise ist bzw. wird einem, mehreren oder jedem Suchmerkmal und/oder Suchmerkmalsausprägung ein spezifischer Relevanzoperator zugeordnet. Dies gestattet eine individuelle Gewichtung von Produktspezifikationen bzw. Suchmerkmalen.

Insbesondere gestattet der vorschlagsgemäße Einsatz des Relevanzoperators eine Gewichtung der Suchmerkmale unter Berücksichtigung unterschiedlicher Anwendergruppen. Dies trägt zu einer Erhöhung des semantischen Niveaus durch die Umsetzung einer spezifischen funktionalen Gewichtung der Produktspezifikation bzw. Suchmerkmalen bei. Durch Relevanzoperatoren können Anwendergruppen jeweils eigene Anforderungen bzw. Suchkriterien an das Auffinden entsprechender Lösungselemente haben oder einrichten, also nach differenzierten Gewichtungen (Schwerpunkten) suchen.

Der Relevanzoperator kann insbesondere dazu verwendet werden, eine Übereinstimmung bzw. Ähnlichkeit von Suchmerkmalen mit Objektmerkmalen bzw. Suchmerkmalsausprägungen mit Objektmerkmalsausprägungen zu gewichten. Hierdurch kann eine Differenzierung zwischen wichtigeren oder unwichtigeren Suchmerkmalen erreicht werden.

Insbesondere lässt sich die Erhöhung des semantischen Niveaus im voranstehend genannten Sinn mittels des folgenden Regelwerks definieren, wobei für jede Semantik entsprechend korrespondierende Anwendergruppen in Klammern angegeben sind:
- Rollenspezifische Semantiken (z. B. Vertrieb, Entwicklung, Prozessentwicklung, Controlling)
- Produktspezifische Semantiken (z. B. Auslegung, Konzeption)
- Prozessspezifische Semantiken (z. B. Fertigung, Produktion)

Die Gewichtung bzw. Verknüpfung des Suchmerkmals und/oder der Suchmerkmalsausprägung an einen entsprechenden Relevanzoperator erfolgt vorzugsweise durch Nutzereingabe, Vorgabe und/oder automatisch, insbesondere auf Basis eines (vorgegebenen oder vorgebbaren) Suchmerkmals und/oder einer (vorgegebenen oder vorgebbaren) Suchmerkmalsausprägung.

Die Gewichtung des Suchmerkmals bzw. der Suchmerkmalsausprägung erfolgt vorzugsweise mittels des Relevanzoperators während des Suchprozesses, insbesondere wobei oder wozu logische Zusammenhänge aus dem Kontext des Anwenders automatisch erfasst werden können.

Ein Lösungselement kann durch ein sogenanntes Objektprofil charakterisiert oder repräsentiert werden. Bei einem Objektprofil handelt es sich insbesondere um ein oder mehrere Objektmerkmale, die Eigenschaften des Lösungselements charakterisieren. Diese Objektmerkmale korrespondieren vorzugsweise zu Suchmerkmalen. Ferner können Objektmerkmalsausprägungen dem jeweiligen Objektmerkmal zugeordnet sein, wobei die Objektmerkmalsausprägung das jeweilige Objektmerkmal näher spezifiziert bzw. charakterisiert, beispielsweise durch einen Wert.

Vorzugsweise wird mindestens ein Objektprofil bereitgestellt, das ein zugeordnetes Lösungselement repräsentiert. Insbesondere ergibt sich das Objektprofil aus der Summe der bewerteten Objektmerkmale, die in der Datenbank gespeichert sein können.

Unter einem "Objektprofil" im Sinne der vorliegenden Erfindung ist vorzugsweise eine Zusammenstellung, insbesondere eine listenförmige Anordnung, von Objektmerkmalen zur Charakterisierung zugeordneter Eigenschaften des Lösungselements und/oder jeweils dazu korrespondierender Objektmerkmalsausprägungen zur Spezifizierung der zugeordneten Suchmerkmale zu verstehen.

Die Zuordnung der jeweiligen Objektmerkmale zum Lösungselement erfolgt dabei vorzugsweise klassenspezifisch, so dass die entsprechenden Eigenschaften der Lösungselemente durch eine spezifische Zusammenstellung zugeordneter Objektmerkmale bzw. deren Objektmerkmalsausprägungen in Form einer klassenspezifischen Gruppe bereitgestellt werden.

Besonders bevorzugt ist vorgesehen, dass das Suchprofil und das Objektprofil zumindest im Wesentlichen den gleichen Aufbau besitzen, d. h. aus einer gleichartigen oder ähnlichen Zusammenstellung, Sequenz bzw. Aneinanderreihung von Suchmerkmalen bzw. Objektmerkmalen und zugeordneten Merkmalsausprägungen bzw. Werten bestehen. Auf diese Weise kann ein einfacher Vergleich zwischen den jeweils korrespondierenden Suchmerkmalsausprägungen des Suchprofils und Objektmerkmalsausprägungen des Objektprofils erfolgen.

Vorzugsweise wird das Suchprofil mit dem Objektprofil verglichen oder verrechnet, insbesondere Suchmerkmalsausprägungen mit Objektmerkmalsausprägungen. Hierbei können Übereinstimmungen, Ähnlichkeiten und/oder Unterschiede ermittelt und gegebenenfalls mit dem Relevanzoperator gewichtet werden.

Besonders bevorzugt wird aus dem Ergebnis dieses Vergleichs oder Verrechnung zwischen dem Suchprofil und dem Objektprofil mindestens eine, vorzugsweise dimensionslose, Ähnlichkeitsziffer ermittelt.

In diesem Zusammenhang ist es zweckmäßig, wenn der Vergleich bzw. die Verrechnung zwischen dem Suchprofil und dem Objektprofil unter Verwendung einer Metrik erfolgt, die den Grad der Überstimmung zwischen den jeweiligen Objektmerkmalen oder -merkmalsausprägungen bzw. Produktspezifikationen des Objektprofils und den entsprechenden Suchmerkmalen oder -merkmalsausprägungen bzw. Produktspezifikationen des Suchprofils ermittelt.

Suchmerkmale, Erweiterungsmerkmale und/oder Objektmerkmale werden vorzugsweise auch zusammen genommen "Merkmale" genannt. Suchmerkmalsausprägungen, Erweiterungsmerkmalsausprägungen und/oder Obektmerkmalsausprägungen werden vorzugsweise unter dem Begriff "Merkmalsausprägungen" zusammengefasst.

Eine "Ähnlichkeitsziffer" im Sinne der vorliegenden Erfindung repräsentiert dabei vorzugsweise quantitativ und/oder qualitativ die jeweilige Abweichung bzw. den Unterschied bzw. Ähnlichkeit und/oder Übereinstimmung zwischen einer Merkmalsausprägung des Suchprofils einerseits und einer korrespondierenden Merkmalsauprägung des Objektprofils andererseits.

Die Ermittlung der Ähnlichkeitsziffer kann durch Vergleich bzw. Verrechnung sowohl zwischen geometrischen und/oder physikalischen Merkmalsausprägungen bzw. dimensionsbehafteten Werten, als auch zwischen qualitativen bzw. kategorialen oder funktionalen Merkmalsausprägungen, die sich insbesondere aufgrund ihrer Semantik bzw. ihres Kontextes voneinander unterscheiden, erfolgen.

Mit anderen Worten kann die Ermittlung der Ähnlichkeitsziffer durch Vergleich bzw. Verrechnung zwischen Absatz (a) konkreten, spezifischen, expliziten, eindeutigen, messbaren, direkt - insbesondere auf einer Skala - abbildbaren Merkmalsausprägung und/oder einer Merkmalsausprägung, die nicht die geometrische ...graphie charakterisiert, erfolgen. Alternativ oder zusätzlich kann die Ermittlung der Ähnlichkeitsziffer durch Vergleich bzw. Verrechnung von konkreten, spezifischen, expliziten, eindeutigen, messbaren und/oder direkt - insbesondere auf einer Skala - abbildbaren Merkmalsausprägungen erfolgen.

Besonders bevorzugt erfolgt der Vergleich zwischen den unterschiedlichen Merkmalsausprägungen bzw. konkreten, spezifischen, expliziten, eindeutigen, messbaren und/oder direkt - insbesondere auf einer Skala - abbildbaren Merkmalsausprägungen bzw. Werten auf Basis einer Transformationsvorschrift, vorzugsweise wobei
a) die quantitativen bzw. geometrischen und/oder physikalischen Merkmalsausprägungen in einem relativen Vergleich zueinander und/oder
b) die qualitativen bzw. kategorialen Merkmalsausprägungen bzw. abstrakte, umfassende, implizite, zu interpretierende, nicht messbare, nicht direkt - insbesondere auf einer Skala - abbildbare mittels einer Interpretationsvorschrift unter Berücksichtigung ihrer jeweiligen Semantik bzw. ihres textuellen Aufbaus
in die entsprechende, vorzugsweise dimensionslose und/oder gemeinsame bzw. einheitliche, Ähnlichkeitsziffer überführt werden.

Besonders bevorzugt wird im Rahmen der Transformationsvorschrift über den Einsatz der Relevanzoperatoren eine spezifische Gewichtung der zugeordneten Merkmale vorgenommen, so dass die resultierende Ähnlichkeitsziffer korrespondierend zur Relevanz des zugeordneten Merkmals ausgeprägt ist. Damit können in vorteilhafter Weise auch unterschiedliche Semantiken, die sich aus der Anwendungslogik generieren, durch die Ähnlichkeitsziffer abgebildet werden.

Insbesondere wird auf Basis der Ähnlichkeitsziffer ein erster Abstandswert zwischen dem Objektprofil bzw. des hierzu korrespondierenden Lösungselements und dem Suchprofil ermittelt. Hierzu wird insbesondere auf, eine, vorzugsweise mindestens zwei Ähnlichkeitsziffern eine geeignete Metrik, vorzugsweise eine Funktionsvorschrift, insbesondere eine quadratische Distanzfunktion, angewendet, so dass als Ergebnis dieses Vergleichs bzw. dieser Verrechnung zwischen dem Suchprofil und dem Objektprofil ein erster Abstandswert ermittelt wird, der als vorzugsweise skalare Größe zusammenfassend die Ähnlichkeit bzw. Abweichung zwischen dem Suchprofil und dem Lösungselement repräsentiert.

Besonders bevorzugt werden mindestens zwei, drei oder mehr Objektprofile bereitgestellt, die jeweils ein Lösungselement repräsentieren.

Unterschiedliche Objektprofile sind vorzugsweise jeweils dadurch charakterisiert, dass die Objektmerkmale bzw. die zugeordneten Objektmerkmalsausprägungen zu unterschiedlichen Lösungselementen, vorzugsweise innerhalb jeweils einer zugeordneten klassenspezifischen Gruppe, korrespondieren. Ein erstes Objektprofil kann hierbei zu einem ersten Lösungselement korrespondieren und ein zweites Objektprofil zu einem zweiten Lösungselement usw.

Verschiedene Lösungselemente unterscheiden sich vorzugsweise dadurch, dass sie durch unterschiedliche Objektprofile bzw. Objektmerkmale charakterisiert bzw. abgebildet werden und/oder unterschiedliche Objektmerkmalsausprägungen zugeordneter Objektmerkmale aufweisen. Ein erstes Lösungselement weicht also - vorzugsweise jedenfalls hinsichtlich der Anordnung bzw. Klassifizierung der zugeordneten, insbesondere kategorialen bzw. qualitativen und/oder quantitativen, Merkmale oder den jeweiligen Objektmerkmalsausprägungen zur Spezifizierung zugeordneter Objektmerkmale - von einem zweiten oder weiteren Lösungselement ab. Hierbei kann eine Abweichung bezüglich eines Objektmerkmals oder einer zugeordneten Objektmerkmalsausprägung ausreichen.

Die Objektprofile werden vorzugsweise miteinander verglichen oder verrechnet. Mit oder aus dem Ergebnis dieses Vergleichs oder dieser Verrechnung kann mindestens eine, vorzugsweise dimensionslose, Ähnlichkeitsziffer ermittelt. Auf diese Weise können Abstände zwischen den Lösungselementen ermittelt werden.

Auf Basis von Abständen zwischen den Lösungselementen und/oder dem Suchprofil kann eine Auswahl bzw. Vorauswahl potenziell geeigneter Lösungselemente erfolgen, insbesondere grafisch, grafisch unterstützt und/oder automatisch.

Für weitere Ausführungen bzw. Einzelheiten im Zusammenhang mit der Ermittlung der Ähnlichkeitsziffer zwischen den mindestens zwei Objektprofilen kann auf die Ausführungen im Zusammenhang mit der Ermittlung der Ähnlichkeitsziffer zwischen dem Suchprofil und dem Objektprofil verwiesen werden, die hier in entsprechender Weise gelten.

Auf Basis der mindestens einen Ähnlichkeitsziffer kann ein zweiter Abstandswert zwischen den mindestens zwei Objektprofilen bzw. den hierzu korrespondierenden Lösungselementen ermittelt werden. Mit anderen Worten wird zusätzlich zur Ermittlung des ersten Abstandswerts zwischen dem Suchprofil und dem Lösungsprofil auch ein zweiter Abstandswert zwischen mindestens zwei Lösungselementen bzw. deren Objektprofilen ermittelt, der eine Ähnlichkeit oder Abweichung zwischen den Objektprofilen bzw. den hierzu korrespondierenden Lösungselementen repräsentiert.

Mit anderen Worten ist bevorzugt, dass allen Lösungselementen untereinander und zum Suchprofil ermittelt, insbesondere unter der Voraussetzung, dass die Ähnlichkeitsziffern bzw. Abstände einen bevorzugt festgelegten maximalen Wert oder Abstand nicht überschreiten.

Dies gestattet vorzugsweise eine Vorauswahl und/oder (grafische) Repräsentation bzw. Komplexitätsreduktion bzw. eine anwenderfreundliche Durchführung des erfindungsgemäßen Verfahrens durch eine gezielte Zusammenstellung der Suchergebnisse bzw. Ähnlichkeiten zwischen den ermittelten Lösungselementen und dem Suchprofil einerseits und zwischen den jeweils ermittelten Lösungselementen andererseits.

Vorzugsweise wird das Suchprofil automatisch auf Basis eines Kontextelements erfasst und/oder abgeleitet. Dies gestattet eine anwenderfreundliche bzw. komfortable und/oder sichere Erfassung bzw. Ermittlung des Suchprofils.

Vorzugsweise kann das Suchprofil durch Auswhal eines oder mehrerer Lösungselemente und/oder anhand ihrer Merkmalsausprägungen erfasst und/oder abgeleitet werden.

Unter dem Begriff "Kontextelement" ist vorzugsweise ein Lösungselement zu verstehen. Es ist möglich, dass das Kontextelement ist, aufweist oder repräsentiert wird durch ein (Computer-)Modell oder Konstruktionsdaten eines Bauteils bzw. einer Baugruppe, das bzw. die bevorzugt zur Erfüllung einer technischen Funktion innerhalb eines Industrieerzeugnisses ausgebildet ist. Hierbei kann es sich um eine Form eines Lösungselements handeln. Jedoch kann es sich bei dem Kontextelement auch um technische Komponenten bzw. Anordnungen handeln, die sich noch im Entwicklungsstadium befinden und folglich noch nicht zur eigenständigen Umsetzung technischer Funktionen ausgebildet sind.

In diesem Zusammenhang ist es insbesondere vorgesehen, dass - ausgehend von einem Startteil bzw. (Ausgangs-)Kontextelement - ein oder mehrere Suchprofile, insbesondere parallel oder hintereinander, auf Basis eines oder unterschiedlicher Kontextelemente erfasst und/oder abgeleitet werden.

Dies gestattet eine insbesondere iterative Verfeinerung des Suchprofils mittels einer vorzugsweise schrittweisen Reduzierung bzw. Verkleinerung des Abstandswertes zwischen dem Suchprofil und Lösungselementen mittels gezielt angepasster Suchprofile, die insbesondere automatisch durch Ableiten entsprechender Lösungselemente erfasst werden.

Zur Durchführung des zuvor beschriebenen Verfahrens gemäß eines oder mehrerer, bedarfsweise auch miteinander kombinierter oder separat realisierter Aspekte ist gemäß eines weiteren, auch unabhängig realisierbaren Aspekts der vorliegenden Erfindung ein System zum Auffinden von Lösungselementen vorgesehen.

Das System weist vorzugsweise mindestens eine Benutzerschnittstelle zur Eingabe und/oder zum Erfassen eines Suchprofils auf.

Eine Benutzerschnittstelle im Sinne der vorliegenden Erfindung weist vorzugsweise mindestens eine Eingabeeinrichtung, insbesondere eine Tastatur, eine Computermaus, ein Trackball, ein Touch-Screen, eine Datenschnittstelle und/oder eine sonstige Einrichtung zur Steuerung oder zur Dateneingabe in einem Computer o. dgl. auf.

Das System weist vorzugsweise eine Datenverarbeitungseinrichtung zur Verarbeitung des Suchprofils auf.

Das System bzw. die Benutzerschnittstelle weist vorzugsweise eine graphische Anzeigeeinrichtung auf. Eine Anzeigeeinrichtung im Sinne der vorliegenden Erfindung ist insbesondere ein Display, Touch-Display, Projektor o. dgl. Vorzugsweise ist durch die Anzeigeeinrichtung mindestens eine Ergebnisoberfläche darstellbar.

Vorzugsweise weist das System eine Speichereinrichtung auf, in der mindestens ein Objektprofil hinterlegt ist, das zur Repräsentation eines zugeordneten Lösungselements ausgebildet ist.

In der Ergebnisoberfläche sind vorzugsweise ein oder mehrere graphische Lösungselement-Äquivalente darstellbar, die jeweils mindestens ein zugeordnetes Lösungselement repräsentieren.

Besonders bevorzugt ist auf der Anzeigeeinrichtung ein graphisches Suchprofil-Äquivalent darstellbar, das ein bzw. eine durch das Suchprofil charakterisiertes bzw. spezifiziertes Bauteil bzw. Baugruppe graphisch repräsentiert. Dies ist jedoch nicht zwingend. Das Suchprofil-Äquivalent kann auch ein Zentrum oder Mittelpunkt sein oder auf eine andere Weise repräsentiert werden, auch ohne Darstellung.

Durch die Anzeigeeinrichtung kann mindestens eine Konfigurationsoberfläche darstellbar sein, vorzugsweise wobei in der Konfigurationsoberfläche mindestens ein Suchprofil darstellbar und/oder konfigurierbar ist.

Die vorliegende Erfindung betrifft gemäß eines weiteren, auch unabhängig realisierbaren Aspekts ferner ein Computerprogrammprodukt, insbesondere ein computerlesbares Speichermittel, Speichermedium oder ein Computer, Microcontroller oder sonstiges Gerät mit einem Prozessor.

Das Computerprogrammprodukt weist vorzugsweise Programmcodemittel auf, die dazu ausgebildet sind, das vorschlagsgemäße Verfahren bzw. die Verfahrensschritte des vorschlagsgemäßen Verfahrens auszuführen oder zu bewirken. Die Programmcodemittel werden vorzugsweise auf einem Computer oder Prozessor ausgeführt, wodurch das Verfahren bzw. die Verfahrensschritte ausgeführt werden.

Insbesondere kann es sich bei dem Computerprogrammprodukt um einen Datenträger, eine Netzwerkressource wie eine Datenbank, ein FTP-Server o. dgl. mit einem Programm zur Ausführung des Verfahrens handeln. Alternativ oder zusätzlich handelt es sich um einen Rechner oder ein computerbasiertes Gerät oder ein Verbund, Netzwerk und/oder System mit einem oder mehreren rechner- oder computerbasierten Geräten mit dem Programmcodemittel zur Durchführung des Verfahrens.

In besonders vorteilhafter Weise lässt sich das vorschlagsgemäße Verfahren und/oder das vorschlagsgemäße System im Bereich der Produktentwicklung, insbesondere zur Umsetzung einer systematischen und zielorientierten Erhebung von Anforderungen an zu entwickelnde bzw. konfigurierende Produkte als entscheidende Voraussetzung für eine frühe Marktplatzierung und hohe Wettbewerbsfähigkeit neu entwickelter Produkte einsetzen bzw. verwenden. Insbesondere ist das Verfahren und/oder das System zur gezielten Wiederverwendung bereits entwickelter Baugruppen bzw. Systeme - insbesondere Lösungselemente - ausgebildet, da sich hier ein besonders hoher Nutzen durch Vermeidung unnötiger Entwicklungskosten im Rahmen von Versuchen bzw. Prototyping ergibt. Alternativ oder zusätzlich kann die Erfindung jedoch auch in anderen Bereichen oder für andere Zwecke vorteilhaft eingesetzt werden, beispielsweise Arbeitsvorbereitung, Fertigungssteuerung, Instandhaltung, Einkauf, Beschaffung und/oder Service. Ein Einsatz ist auch im Zusammenhang mit vorläufig lediglich durch Anforderungen spezifizierte Lösungselemente denkbar und vorteilhaft.

Bei dem Verfahren beziehen sich die wesentlichen Suchmerkmale bzw. Suchmerkmalsausprägungen (Suchparameter) vordergründig auf funktionale Aspekte bzw. Merkmale zur ermitteln der Lösungselemente, wodurch gegenüber Suchverfahren lediglich auf Basis geometrischer Suchkriterien ein zielführenderes Auffinden von Lösungselementen, d. h. insbesondere ohne ein Ausfiltern funktional relevanter und lediglich geometrisch unterschiedlicher Lösungselemente, ermöglicht wird.

Darüber hinaus ermöglicht die Erfindung in vorteilhafter Weise durch die Kombination aus funktionalen oder sonstigen, nicht-geometrischen bzw. nicht die Topographie betreffenden und geometrischen bzw. die Topographie betreffenden Suchmerkmalen innerhalb desselben Suchprofils bzw. Suchvorgangs eine Komplexitätsreduktion in Bezug auf die Verteilung der Datenquellen, in denen gesucht wird. Dies gestattet insbesondere eine integrative Suche über sowohl geometrische als auch nicht-geometrische (funktionale) Merkmale im Rahmen eines einzigen Suchvorgangs.

Des Weiteren ermöglicht das vorschlagsgemäße Verfahren und/oder das vorschlagsgemäße System eine anwenderfreundliche Visualisierung bzw. Zusammenfassung der jeweiligen Abweichungen bzw. Abstandswerte der Suchergebnisse bzw. ermittelten Lösungselemente vom Suchprofil, insbesondere wobei gleichzeitig entsprechende Abweichungen zwischen den ermittelten bzw. bereitgestellten Lösungselementen selbst veranschaulichend dargestellt werden. Daraus resultiert eine komfortable Interpretation der Suchergebnisse durch die Verwendung graphischer Äquivalente, die mittels einer entsprechenden Anzeigeeinrichtung vorzugsweise entsprechend visualisierbar sind.

Weitere Merkmale, Vorteile, Eigenschaften und Anwendungsmöglichkeiten der vorliegenden Erfindung ergeben sich aus den Ansprüchen und der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Darstellung eines Aspekts des erfindungsgemäßen Verfahrens;
- Fig. 2: eine schematische Darstellung eines weiteren Aspekts des erfindungsgemäßen Verfahrens;
- Fig. 3: eine schematische Darstellung eines weiteren Aspekts des erfindungsgemäßen Verfahrens;
- Fig. 4: eine schematische Darstellung eines besonders bevorzugten Aspekts des erfindungsgemäßen Verfahrens;
- Fig. 5: eine schematische Darstellung einer bevorzugten Ausführungsform des erfindungsgemäßen Systems; und
- Fig. 6: eine schematische Darstellung einer Ergebnisoberfläche einer Anzeigeeinrichtung des erfindungsgemäßen Systems.

In den Figuren werden für gleiche oder ähnliche Teile oder Elemente dieselben Bezugszeichen verwendet, wobei gleiche oder ähnliche Eigenschaften erreicht werden können, auch wenn von einer wiederholten Beschreibung abgesehen wird.

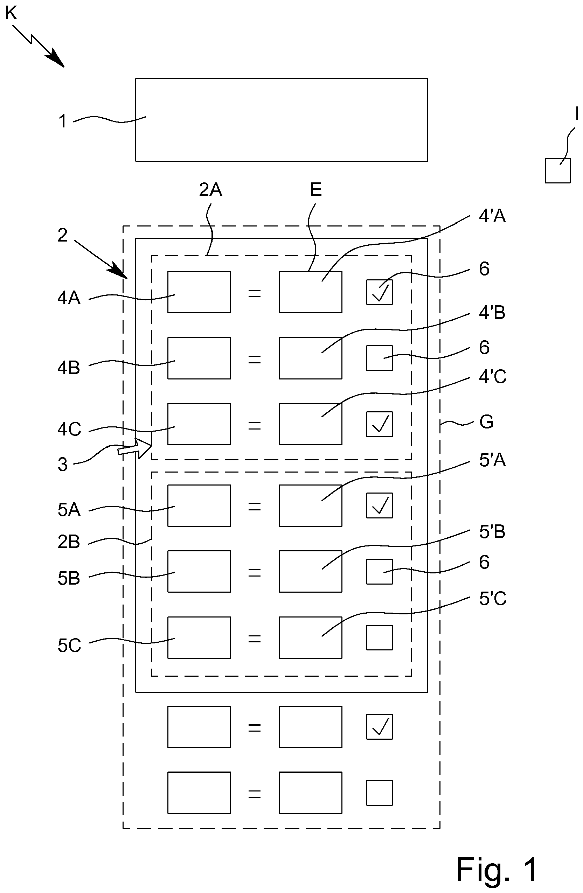

In Fig. 1 ist ein Ablauf des vorschlagsgemäßen Verfahrens zum Auffinden mindestens eines Lösungselements 1 schematisch wiedergegeben.

Die vorliegende Erfindung betrifft insbesondere das Gebiet der systematischen und zielorientierten Erhebung von Anforderungen an neu zu entwickelnde bzw. zu konfigurierende Produkte. Hierbei kann vorgesehen sein
- relevante Anforderungen zu kennen, Konsens unter den Stakeholdern über die Anforderungen herzustellen, die Anforderungen konform zu vorgegebenen Standards zu dokumentieren und die Anforderungen systematisch zu managen,
- die Wünsche und Bedürfnisse der Stakeholder zu verstehen und zu dokumentieren,
- die Anforderungen zu spezifizieren und zu managen, um das Risiko zu minimieren, ein System auszuliefern, das nicht den Wünschen und Bedürfnissen der Stakeholder entspricht.

Eine Anforderung im Sinne der vorliegenden Erfindung ist vorzugsweise:
1. eine Eigenschaft oder Fähigkeit, die von einem Benutzer (Person oder System) zur Lösung eines Problems oder zur Erreichung eines Ziels benötigt wird;
2. eine Eigenschaft oder Fähigkeit, die ein System oder Teilsystem erfüllten oder besitzen soll, um einen Vertrag, eine Norm, eine Spezifikation oder andere, formell vorgegebene Dokumente zu erfüllen;
3. eine dokumentierte Repräsentation einer Eigenschaft oder Fähigkeit gemäß (1) oder (2).

(Funktionale) Spezifikationen sind also bevorzugt eine Teilmenge von Anforderungen. Deutlich wird dieser Sachverhalt auch daran, dass funktionale Spezifikationen sich durch Analyse bzw. Verfeinerung der Systemanforderungen ergeben. Demzufolge wird teilweise auch der Begriff "Anforderungsspezifikation" verwendet.

Vorzugsweise unterscheidet man fünf verschiedene Spezifikationslevels, auf welche die Systemanforderungen heruntergebrochen werden. Diese Analyse erfolgt vorzugsweise "Top-Down", so dass ausgehend von den oberen Systemebenen tiefere Ebenen bis hin zu den einzelnen Systemelementen bezüglich ihrer Funktionalität spezifiziert werden.

Auf allen Ebenen liegen diese Spezifikationen zumindest teilweise auch als "klassenspezifische" Merkmale vor. Vorzugsweise wird der Begriff "Merkmal" bzw. "Merkmalausprägung" als informationstechnische, attributive Eigenschaft von Datenobjekten verstanden, der die methodischen Begriffe "Anforderung" und "funktionale Spezifikation" aus Sicht des Datenmodells beschreibt. Diese Merkmale können geometrische Aspekte beinhalten, gehen i.d.R. aber weit darüber hinaus.

Eine bevorzugte Vorgehensweise, Systeme bzw. Systemelemente im Verlauf des Produktentwicklungsprozesses anhand ihrer technischen Merkmale auf verschiedenen Systemebenen wiederzufinden, ergibt sich insbesondere aus dem V-Modell nach "Haberfellner, Reinhard; de Weck, Olivier; Fricke, Ernst, Vössner, Siegfried: Systems Engineering - Grundlagen und Anwendung; 12. Auflage; orell füssli Verlag; Zürich, 2012". Das Modell beschreibt in generischer Weise zunächst, wie ausgehend von der System-/Produktebene Anforderungen bis auf Einzelteilebene feinspezifiziert werden. Dabei werden (technische) Funktionen, die durch die Systemelemente wie komplette Sub-Systeme, Baugruppen oder Einzelteile zu erfüllen sind, aus den Anforderungen heraus entwickelt und spezifiziert. Nach der eigentlichen Produktentwicklung (z.B. Gestaltmodellierung in der Domäne "Mechanik") von Einzelteilen werden diese zunächst einzeln und dann im Zusammenhang (Baugruppen, Schnittstellen) auf den verschiedenen Systemebenen getestet (rechter Ast des Modells). Diese Tests auf verschiedenen Produktebenen beziehen sich direkt auf die linksseitig definierten Spezifikationen. Damit wird aus methodischer Sicht eine Erfüllung aller Anforderungen im Entwicklungsprozess sichergestellt.

Besonders bevorzugt werden Systemelemente aber nicht immer neu entwickelt, sondern man strebt aus wirtschaftliche Gründen einen möglichst hohen Grad der Wiederverwendung an. Ein besonders hoher Nutzen ergibt sich dann, wenn bereits entwickelte Baugruppen bzw. Systeme als Lösungselemente 1 wiederverwendet werden können, da die gesamten Entwicklungskosten einschließlich Tests bzw. Prototyping gespart werden können. Konkrete Anwendungen dieses Ansatzes finden sich in Baukastensystemen und Plattformkonzepten, die u. a. in der Automobilentwicklung verbreitet sind.

Ein Lösungselement 1 stellt vorzugsweise eine realisierte, bewährte Lösung zur Erfüllung einer Funktion eines Industrieerzeugnisses dar. Diese Lösung kann elementar sein wie die Maschinenelemente Schraube oder Welle-/Nabe-Verbindung, aber auch sehr komplex wie ein Antriebssystem, bestehend aus mechanischen, elektrischen und elektronischen Baugruppen und Regelungstechnik/Software. Je nach Fortschritt im Entwicklungsprozess weisen die Lösungselemente 1 unterschiedliche Aspekte auf. Beispiele für Aspekte sind Anforderungen, Verhalten und Gestalt.

Für die Erschließung des o. g. Nutzens ist bevorzugt, dass das Auffinden der Lösungselemente 1 ermöglicht bzw. verbessert oder vereinfacht wird. Dabei ist bevorzugt, dass der Suchprozess derart einfach gestaltet werden und in die Abläufe integriert ist, dass eine ausreichende Anwenderakzeptanz erreichbar wird. Das gelingt insbesondere dann, wenn eine effektive Suche nicht nur nach geometrischen Parametern, sondern auch nach einerseits validierten Produkteigenschaften und andererseits zu erfüllenden Spezifikationen ermöglicht wird, wie bei der vorliegenden Erfindung. Vor diesem Hintergrund wird die Verwendung von Lösungselementen 1 zur "Systemkomposition" bevorzugt, auch Konfigurationsprozess bezeichnet.

In der Praxis treten hierbei insbesondere folgende Probleme und Randbedingungen auf:
- Es gibt eine große Anzahl dokumentierter und suchrelevanter Eigenschaften pro Systemelement (Komplexitätsproblem 1).
- Es liegt eine große Anzahl potentiell wiederverwendbarer Objekte vor (Komplexitätsproblem 2).
- Die wesentlichen Merkmalausprägungen, nach denen gesucht wird, liegen in aller Regel nur verteilt auf verschiedene Datenquellen (z.B. Stücklisten in ERP-Systemen, z.B. Produktstrukturen, Dokumente und Listendarstellungen in PLM-Systemen) vor (Komplexitätsproblem 3).
- Die wesentlichen Suchparameter beziehen sich oftmals auf funktionale Aspekte, die neuartigen 3D-Suchmaschinen mit Ähnlichkeitssuche über die Geometrie nicht zugänglich sind (Vollständigkeitsproblem 1).
- Klassische Suchsysteme schränken die Suchergebnisse von vornherein ein, und zwar systembedingt durch die meist angewendeten Suchfilter. Potentielle Ergebnisse, die in der Nähe liegen, werden vollständig ausgeblendet (Vollständigkeitsproblem 2).
- Die Suchergebnisse werden zumeist nur in Form unübersichtlicher Tabellen dargestellt. Es findet weder eine Aggregation der Suchergebnisse noch eine Aggregation der Abweichungen vom Suchprofil statt. Daraus resultieren zum einen ein notwendiger manueller und damit mühsamer Abgleich der Suchergebnisse mit den Suchzielen und zum Anderen eine aufwändige, methodisch kaum unterstützbare Interpretation der Suchergebnisse (Visualisierungsproblem).

Im Ergebnis werden aufgrund der aufgezeigten Restriktionen immer noch aufwändige Neuentwicklungen gestartet, obwohl verfügbare und bewährte Lösungselemente 1 vorhanden sind. Dies kann mit der vorliegenden Erfindung vermieden oder verringert werden.

Durch ein Suchprofil 2 wird das Auffinden des Lösungselements 1 konfiguriert bzw. konfigurierbar gemacht. Das Suchprofil 2 weist Suchmerkmale 4A-4F auf. Insbesondere handelt es sich um eine Zusammenstellung möglicher bzw. gewünschter Merkmale vorzugsweise in Form einer oder mehrerer Eigenschaften des aufzufindenden Lösungselements 1. Mit anderen Worten werden Lösungselemente 1 anhand von Suchprofilen 2 gefunden.

Zur Erstellung des Suchprofils 2 wird, vorzugsweise von einem (nicht dargestellten) Nutzer, ein Basissuchprofil 2A erstellt bzw. vorgegeben. Das Suchprofil 2, insbesondere das Basissuchprofil 2A, weist vorzugsweise Suchmerkmale 4A-4F und, insbesondere, zu diesem korrespondierende Suchmerkmalsausprägungen 4'A-4'F auf. Zur Erstellung des Suchprofils 2 können diese Suchmerkmale 4A-4F und/oder ein oder mehrere Suchmerkmalsausprägungen 4'A-4'F vorgegeben oder definiert werden. Dies kann durch Nutzereingabe, automatisch und insbesondere durch Einlesen entsprechender Information eines Lösungselements 1 erfolgen.

Vorzugsweise ist für jedes Suchmerkmal 4A-4F des Suchprofils 2 eine Suchmerkmalsausprägung 4'A-4'F oder ein Platzhalter / Wildcard ("*") vorgesehen bzw. es wird entsprechend gesucht.

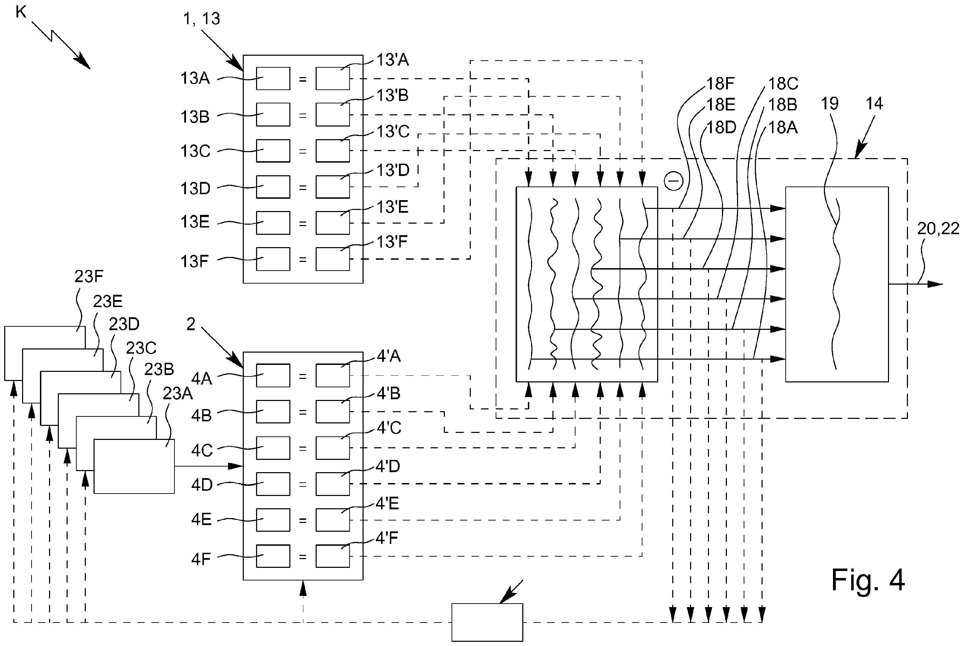

Vorzugsweise ist eine manuelle Erstellung bzw. Generierung des Basissuchprofils 2A über einen (nicht dargestellten) Nutzer vorgesehen. Alternativ zur manuellen Erstellung des Basissuchprofils 2A ist auch eine automatische Erstellung des Basissuchprofils 2A und/oder des Suchprofils 2 möglich, wie insbesondere im Rahmen der Ausführungen im Zusammenhang mit Fig. 4 noch im Detail erläutert wird.

Die manuelle Erstellung des Basissuchprofils 2A kann über ein Auswahlwerkzeug 3, insbesondere einen Cursor, zur Auswahl mindestens einer möglichen Eigenschaft bzw. eines möglichen Suchmerkmals 4A-4F des Lösungselements 1 und/oder eine Eingabemaske E zur Eingabe und/oder Spezifizierung der zuvor ausgewählten Eigenschaft des Lösungselements 1 bzw. der Suchmerkmalsausprägung 4'A-4'F erfolgen.

In dem Basissuchprofil 2A wird vorzugsweise mindestens ein Suchmerkmal 4A-4F, insbesondere mittels des Auswahlwerkzeugs 3, ausgewählt, vorzugsweise wobei das Suchmerkmal 4A-4F eine mögliche Eigenschaft des Lösungselements 1 repräsentiert.

Insbesondere ist in dem Basisprofil 2A mindestens eine dem Suchmerkmal 4A-4F zugeordnete Suchmerkmalsausprägung 4'A-4'F, vorzugsweise durch Eingabe eines hierzu korrespondierenden Wertes über die Eingabemaske E, vorgegeben oder vorgebbar, wobei die Suchmerkmalsausprägung 4'A-4'F eine Spezifizierung des zugeordneten Suchmerkmals 4 repräsentiert.

Im Darstellungsbeispiel ist bzw. wird in dem Basissuchprofil 2A eine, hier gestrichelt hervorgehobene, Gruppe von Suchmerkmalen 4A- 4C mit jeweils hierzu korrespondierenden Suchmerkmalsausprägungen 4'A bis 4'C ausgewählt, eingegeben bzw. vorgegeben.

Gemäß eines Aspekts der vorliegenden Erfindung wird Verwendung bzw. Auswertung des Basissuchprofils 2A, insbesondere automatisch, ein Erweiterungssuchprofil 2B zur Vervollständigung des Suchprofils 2 erstellt, vorzugsweise mittels eines Suchprofilerweiterungsmoduls M1.

Hier kann nach Auswahl der Suchmerkmale 4A- 4C und/oder Vorgabe der hierzu korrespondierenden bzw. spezifizierenden Suchmerkmalsausprägungen 4'A-4'C kann im Folgenden zur Vervollständigung des Suchprofils 2 die Erstellung des Erweiterungssuchprofils 2B erfolgen.

Die Erstellung des Erweiterungssuchprofils 2B erfolgt vorzugsweise automatisch auf Basis bzw. unter Verwendung des vorgegebenen Basissuchprofils 2A. Die automatische Erstellung kann durch den (nicht dargestellten) Nutzer, insbesondere über eine Aktivierung eines Initiierungsmittels I, insbesondere Schalters o. dgl., oder automatisch veranlasst werden. Die Erstellung des Erweiterungssuchprofils 2B kann alternativ oder zusätzlich durch den Start einer Suche oder den Abschluss der Definition von Suchmerkmalen 4A-4C bzw. Suchmerkmalsausprägungen 4'A-4'C erfolgen.

In dem Erweiterungssuchprofil 2B ist mindestens ein Erweiterungssuchmerkmal 5 vorgesehen, das zu einer möglichen Eigenschaft des Lösungselements 1 korrespondiert. Bevorzugt ist in dem Erweiterungssuchprofil 2B eine Erweiterungssuchmerkmalsausprägung 5' hinterlegt, die eine Spezifizierung des hierzu korrespondierenden Erweiterungssuchmerkmals 5 repräsentiert.

Das Erweiterungssuchmerkmal 5 korrespondiert vorzugsweise zu einer Gruppe bzw. Kategorie von Lösungselementen 1, die sich durch die vorgegebenen bzw. vorgebbaren Suchmerkmale 4A-4F bzw. Suchmerkmalsausprägungen 4'A-4'F ergeben. Um Erweiterungssuchmerkmale 5 bzw. hierzu korrespondierende Erweiterungssuchmerkmalsausprägungen 5' zu ermitteln, wird also vorzugsweise das Basissuchprofil 2A analysiert. Hierbei werden insbesondere die Suchmerkmalsausprägungen 4'A-4'F, insbesondere durch einen Vergleich, zur Bestimmung einer Kategorie oder Gruppe von Lösungselementen 1 verwendet. Auf Basis der ermittelten Kategorie oder Gruppe von Lösungselementen 1 kann ein weiteres, geeignetes Erweiterungssuchmerkmal 5 und, bevorzugt, eine hierzu korrespondierende Erweiterungssuchmerkmalsausprägung 5' ermittelt werden. Dieses oder weitere Erweiterungssuchmerkmale 5, vorzugsweise mit hierzu korrespondierenden Erweiterungssuchmerkmalsausprägungen 5'A-5'F, werden dem Suchprofil 2 vorzugsweise ergänzend hinzugefügt. Im Ergebnis weist dann das Suchprofil 2 neben dem Basissuchprofil 2A vorzugsweise auch das Erweiterungssuchprofil 2B mit einem oder mehreren Erweiterungssuchmerkmalen 5 und, vorzugsweise ein oder mehreren hierzu korrespondierenden Erweiterungssuchmerkmalsausprägungen 5' auf.

In dem dargestellten Aspekt des vorschlagsgemäßen Verfahrens ist in dem Erweiterungssuchprofil 2B eine, hier gestrichelt hervorgehobene, Gruppe von Erweiterungssuchmerkmalen 5A-5C mit hierzu entsprechend korrespondierenden Erweiterungssuchmerkmalsausprägungen 5'A-5'C ausgewählt.

Es ist bevorzugt, dass insbesondere alle Merkmale bzw. Anforderungen und/oder Merkmalsausprägungen bzw. Spezifikationen eines zugeordneten Lösungselements 1 in einer, hier gestrichelt hervorgehobenen, klassenspezifischen Gruppe G zusammengefasst, insbesondere systematisch bzw. funktional geordnet, sind. Dementsprechend erfolgt die Auswahl bzw. Erstellung des Basissuchprofils 2A und die Generierung des Erweiterungssuchprofils 2B durch Auswahl bzw. Erfassung von Merkmalen 4'A-4'C, 5'A-5'C und/oder zugeordneten Merkmalsausprägungen 4'A-4'C, 5'A-5'C innerhalb der klassenspezifischen Gruppe G des zugeordneten Lösungselements 1.

Besonders bevorzugt sind die Merkmale bzw. die zugeordneten Merkmalsausprägungen 4'A-4'C, 5'A-5'C innerhalb der klassenspezifischen Gruppe G funktional miteinander verknüpft. In diesem Zusammenhang ist es insbesondere bevorzugt, dass in der klassenspezifischen Gruppe G jedem Suchmerkmal 4A-4C des Basissuchprofils 2A ein spezifisches bzw. funktional zugeordnetes Erweiterungssuchmerkmal 5A-5C hinterlegt ist.

Es ist bevorzugt, dass die Erweiterungssuchmerkmalsausprägung 5' des zugeordneten Suchmerkmals 5 automatisch in Abhängigkeit von einer oder mehreren der vorgegebenen Suchmerkmalsausprägungen 4'A-4'C automatisch festgelegt bzw. dimensioniert wird.

Es ist bevorzugt, dass das Suchprofil 2 mindestens ein Validierungsmittel 6 zur Validierung bzw. zum Gültigkeitsnachweis der Suchmerkmalsausprägung 4'A-4'C des zugeordneten Suchmerkmals 4 aufweist. Mittels des Validierungsmittels 6 kann das Auffinden von Lösungselementen 1 beeinflusst werden. Durch das Validierungsmittel 6 werden beispielsweise nur diejenigen Lösungselemente 1 aufgefunden bzw. ermittelt, für die im Rahmen des Produktentwicklungsprozesses die vorgegebene Suchmerkmalsausprägung 4' des korrespondierenden Suchmerkmals 4 validiert bzw. nachgewiesen ist.

Das Suchprofil 2 kann einen Status eines Merkmalswerts bzw. eines Suchmerkmals 4A-4C aufweisen, insbesondere definiert durch eine Anforderung und/oder eine validierte Eigenschaft. Alternativ oder zusätzlich ist die Suchmerkmalsausprägung 4'A-4'C durch das Lösungselement 1 zu erfüllen, insbesondere unabhängig vom Status. Der Status und die Suchmerkmalsausprägung 4'A-4'C eines Suchmerkmals 4A-4C können getrennt voneinander definiert sein oder werden und/oder im Suchprofil 2 vorgesehen sein.

In einer besonders bevorzugten Ausführungsform ist das Validierungsmittel 6, insbesondere mittels des Auswahlwerkzeugs 3, auswählbar und/oder in Form einer Taste, eines Feldes und/oder auf einem berührungsempfindlichen Anzeigemittel oder durch eine sonstige graphische Applikation ausgebildet.

Nachfolgend werden weitere Aspekte des vorschlagsgemäßen Verfahrens erläutert, wobei die bisherigen Erläuterungen insbesondere entsprechend oder ergänzend gelten, auch wenn von einer wiederholten Beschreibung abgesehen wird.

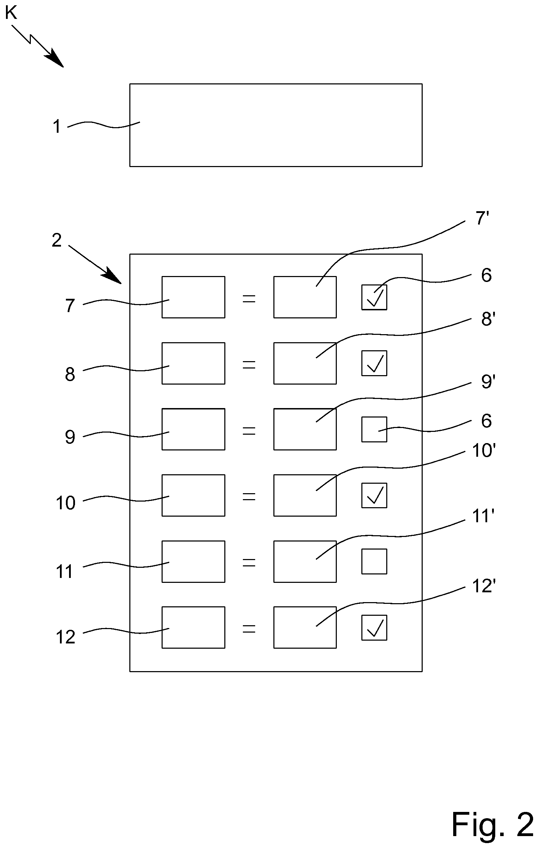

Fig. 2 zeigt in einer schematischen Darstellung einen weiteren, auch unabhängig realisierbaren Aspekt des vorschlagsgemäßen Verfahrens.

Es ist bevorzugt, dass das Suchprofil 2 ein geometrisches Suchmerkmal 7 aufweist, vorzugsweise mit einer hierzu korrespondierenden Suchmerkmalsausprägung 7'.

Alternativ oder zusätzlich weist das Suchprofil 2 ein funktionales Suchmerkmal 8, vorzugsweise mit einer korrespondierenden Suchmerkmalsausprägung 8'. Ein funktionales Suchmerkmal 8 im Sinne der vorliegenden Erfindung betrifft insbesondere funktionale Eigenschaften des aufzufindenden Lösungselements 1, wie beispielsweise eine Antriebsart, Kraftstoffart, Betriebszeit o. dgl.

Alternativ oder zusätzlich weist das Suchprofil 2 ein physikalisches Suchmerkmal 9 auf, vorzugsweise mit einer zugeordneten Suchmerkmalsausprägung 9'. Ein physikalisches Suchmerkmal 9 im Sinne der vorliegenden Erfindung ist vorzugsweise eine Eigenschaft betreffend physikalischer Eigenschaften des aufzufindenden Lösungselements1, beispielsweise einen Betriebsdruck, eine Nennspannung, einen Volumenstrom, eine Saughöhe o. dgl.

Alternativ oder zusätzlich weist das Suchprofil 2 ein produktspezifisches Suchmerkmal 10 auf, vorzugsweise mit einer zugeordneten produktspezifischen Suchmerkmalsausprägung 10'. Ein produktspezifisches Suchmerkmal 10 im Sinne der vorliegenden Erfindung ist vorzugsweise eine Eigenschaft betreffend charakteristische Anwendungsbereiche bzw. maximale Auslegungsparameter.

Alternativ oder zusätzlich weist das Suchprofil 2 ein fertigungsspezifisches Suchmerkmal 11 auf, vorzugsweise mit einer zugeordneten fertigungsspezifischen Suchmerkmalsausprägung 11' ist. Ein fertigungsspezifisches Suchmerkmal 11 im Sinne der vorliegenden Erfindung ist vorzugsweise eine Eigenschaft betreffend notwendige Fertigungsmittel, Fertigungsabläufe und/oder Fertigungsvorschriften.

Alternativ oder zusätzlich weist das Suchprofil 4 ein wirtschaftsspezifisches Suchmerkmal 12 auf, vorzugsweise mit einer korrespondierenden wirtschaftsspezifischen Suchmerkmalsausprägung 12'. Ein wirtschaftsspezifisches Suchmerkmal 12 im Sinne der vorliegenden Erfindung betrifft Eigenschaften des aufzufindenden Lösungselements 1 hinsichtlich eines Ressourcenbedarfs von (Ausgangs-) Komponenten, beispielsweise Halbzeugen o. dgl. und/oder (Compliance-) Regularien und/oder zu erfüllende Stückkosten bzw. Verkaufspreise am Absatzmarkt.

Die im Zusammenhang mit Fig. 1 beschriebenen Suchmerkmale 4A-4C, 5A-5C bzw. Suchmerkmalsausprägungen 4'A-4'C, 5'A-5'C können ganz oder teilweise durch im Zusammenhang mit Fig. 2 erläuterte Suchmerkmale 7-12 bzw. Suchmerkmalsausprägungen 7'-12' gebildet sein oder umgekehrt. Hierbei ist nicht ausgeschlossen, dass die im Zusammenhang mit Fig. 2 offenbarten Suchmerkmale 7-12 bzw. Suchmerkmalsausprägungen 7'-12' mehrfach verwendet werden. Ferner sind die Beispiele aus den Fig. 1 und 2 nicht abschließend zu verstehen, da lediglich eine exemplarische Anzahl von Suchmerkmalen 4A-4C, 5A-5C, 7-12 und hierzu korrespondierende Suchmerkmalsausprägungen 4'A-4'C, 5'A-5'C, 7'-12' aufgeführt sind, jedoch auch andere Anzahlen und Zusammensetzungen möglich sind. Entsprechendes gilt auch für die weiteren, anhand der folgenden Figuren diskutierten Beispiele für Suchprofile 2, wobei die zuvor und im Folgenden diskutierten Aspekte einzeln oder in Kombination vorliegen können.

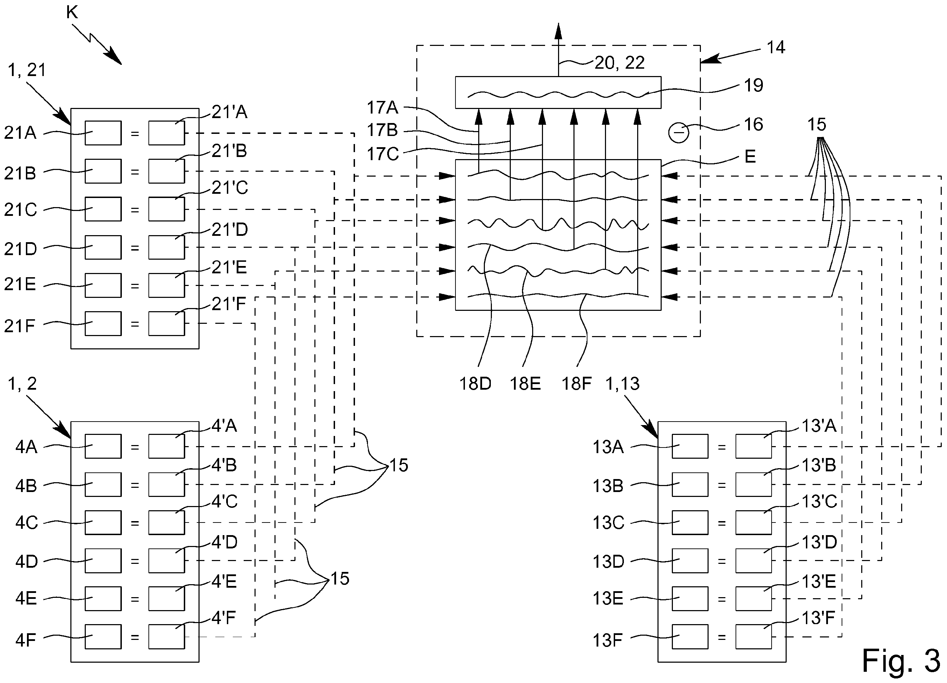

Anhand von Fig. 3 und 4 wird im Folgenden ein durch das vorschlagsgemäße Verfahren unterstütztes bzw. umgesetztes Auffinden von Lösungselementen 1 näher erläutert.

Um ein Lösungselement 1 datentechnisch zu repräsentieren, ist vorzugsweise mindestens ein zu dem Lösungselement 1 korrespondierendes Objektprofil 13 vorgesehen.

Mittels des Objektprofils 13 werden vorzugsweise die Eigenschaften des Lösungselements 1 über entsprechende Objektmerkmale 13A-13F repräsentiert, insbesondere wobei die Objektmerkmale 13A-13F mittels zugeordneter Objektmerkmalsausprägungen 13'A-13'F spezifiziert werden oder sind.

Die Objektmerkmale 13A-13F sind innerhalb des Objektprofils 13 vorzugsweise als Gruppe, zueinander zugeordnet, listenartig oder auf sonstige Weise systematisch angeordnet oder vorgesehen.

Vorzugsweise sind die Objektmerkmale 13A-13F des Objektprofils 13 im Wesentlichen korrespondierend zu Suchmerkmalen 4A-4F des Suchprofils 2 oder Teilen hiervon vorgesehen oder umgekehrt.

Vorzugsweise wird das Suchprofil 2 mit dem (jeweiligen) Objektprofil 13 verglichen bzw. verrechnet.

Es ist bevorzugt, dass zum Verrechnen oder zum Vergleichen des Suchprofils 2 mit dem (jeweiligen) Objektprofil 13 die Suchmerkmalsausprägungen 4'A-4'F, die zu entsprechenden Suchmerkmalen 4A-4F des Suchprofils 2 korrespondieren, automatisch mit zugeordneten Objektmerkmalsausprägungen 13'A-13'F, die zu entsprechenden Objektmerkmalen 13A-13F des Objektprofils 13 korrespondieren, verglichen oder verrechnet werden. Dies erfolgt vorzugsweise mit einem Suchmodul M2.

Bei der Auswahl der Gruppe von Suchmerkmalen 4A-4F und der folgenden Ermittlung bzw. Analyse des Objektprofils 13 erfolgt vorzugsweise automatisch eine paarige 1:1 Zuordnung der Suchmerkmalsausprägungen 4'A-4'F der Suchmerkmale 4A-4F des Suchprofils 2 mit jeweils korrespondierenden Objektmerkmalsausprägungen 13'A- 13'F der Objektmerkmale 13A- 13F des Objektprofils 13.

Zur Verrechnung bzw. zum Vergleich des Suchprofils 2 mit dem Objektprofil 13 werden die jeweiligen Gruppen der Suchmerkmalsausprägungen 4'A- 4'F und der Objektmerkmalsausprägungen 13'A-13'F, vorzugsweise paarweise, miteinander verglichen, insbesondere mittels einer Datenverarbeitungseinrichtung 14. Entsprechende Pfeile 15 zeigen schematisch die paarweise Verrechnung bzw. Analyse der Suchmerkmalsausprägungen 4'A-4'F des Suchprofils 2 mit den Objektmerkmalsausprägungen 13'A-13'F des Objektprofils 13.

Der Vergleich bzw. die Verrechnung des Objektprofils 13 mit dem Suchprofil 2 erfolgt vorzugsweise unter Bildung eines Wertes, insbesondere Differenzwertes, eines Abstands, eines die Ähnlichkeit und/oder die Unähnlichkeit repräsentierenden Werts, zwischen den Suchmerkmalsausprägungen 4'A-4'C des Suchprofils 2 und den korrespondierenden Objektmerkmalsausprägungen 13'A-13'F des Objektprofils 13, wie schematisch durch ein Minus-Symbol 16 angedeutet. Jedoch sind hier auch andere Verarbeitungs- bzw. Verrechnungsstrategien möglich.

Aus dem Ergebnis des Vergleichs bzw. der Verrechnung zwischen dem Suchprofil 2 und dem Objektprofil 13 wird vorzugsweise mindestens eine, insbesondere dimensionslose, Ähnlichkeitsziffer 17 ermittelt. Im Darstellungsbeispiel werden mehrere Suchmerkmale 4A-4F bzw. Suchmerkmalsausprägungen 4'A-4'F verrechnet bzw. verglichen. Die hierdurch gebildeten Ergebnisse werden verwendet bzw. verrechnet, um die Ähnlichkeitsziffer 17 zu ermitteln.

Die Ähnlichkeitsziffer 17 wird also vorzugsweise durch den Vergleich eines oder mehrerer Suchmerkmale 4A-4F mit korrespondierenden Objektmerkmalen 13A-13F bzw. der Verrechnung oder dem Vergleich von einem oder mehreren Objektmerkmalsausprägungen 13'A-13'F mit hierzu korrespondierenden Suchmerkmalsausprägungen 4'A-4'F ermittelt werden.

Durch die paarweise Verrechnung bzw. den paarweisen Vergleich der Objektmerkmalsausprägungen 13'A-13'F des Objektprofils 13 mit den zugeordneten Suchmerkmalsausprägungen 4'A-4'F des Suchprofils 2 werden vorzugsweise jeweils korrespondierende Ähnlichkeitsziffern 17A bis 17F ermittelt.

Vorzugsweise wird/werden das das Suchmerkmal 4A-4F und/oder die Suchmerkmalsausprägung 4'A-4'F und/oder das Ergebnis des Vergleichs oder der Verrechnung über einen eine Relevanz des Suchmerkmals 4 repräsentierenden Relevanzoperator 18 gewichtet. Die Gewichtung erfolgt vorzugweise mit einem Gewichtungsmodul M3.

Insbesondere ist vorgesehen, dass während des Suchprozesses zum Auffinden der Lösungselemente 1 eine spezifische Gewichtung von Suchmerkmalen 4A-4F und/oder Suchmerkmalsausprägungen 4'A-4'F bzw. des Ergebnisses des Vergleichs bzw. der Verrechnung mittels des Relevanzoperators 18 erfolgt.

Besonders bevorzugt ist vorgesehen, dass während oder mit der Ermittlung der Ähnlichkeitsziffer 17 als Abstand und/oder Unterschied zwischen dem Suchmerkmal 4A des Suchprofils 2 und einem zugeordneten Objektmerkmal 13A des Objektprofils 13 eine spezifische Gewichtung des Suchmerkmals 4A-4F und/oder der Suchmerkmalsausprägung 4'A-4'F bzw. der (jeweiligen) Ähnlichkeitsziffer 17 bzw. des Abstands oder Unterschieds mittels des Relevanzoperators 18 erfolgt.

In diesem Zusammenhang ist vorzugsweise vorgesehen, dass während oder mit der Ermittlung der Ähnlichkeitsziffer 17 ein dem Suchmerkmal 4A und/oder der Suchmerkmalsausprägung 4'A-4'F des Suchprofils 2 zugeordneter Relevanzoperator 18, insbesondere in Abhängigkeit zur (vorgegebenen) Suchmerkmalsausprägung 4'A-4'F des zugeordneten Suchmerkmals 4A-4F ermittelt wird.

Alternativ ist es jedoch auch möglich, dass ein vorzugsweise festgelegter, zu dem Suchmerkmal 4 und/oder der Suchmerkmalsausprägung 4' korrespondierender Relevanzoperator 18, beispielsweise in einer Datenbank, verwendet, abgelegt oder abgespeichert wird oder ist. Dieser kann bei der Suche bzw. dem Auffinden, also insbesondere bei dem Vergleich bzw. der Verrechnung, automatisch verwendet werden. Bei der Datenbank kann es sich um eine Tabelle, Datei, Liste oder um eine sonstige Datenstruktur handeln.

Gemäß eines weiteren, auch unabhängigen realisierbaren Aspekts der vorliegenden Erfindung ist vorgesehen, dass vor der Ermittlung der Ähnlichkeitsziffer 17 zur individuellen Gewichtung des Suchmerkmals 4 und/oder der Suchmerkmalsausprägung 4' bzw. des Ergebnisses des Vergleichs bzw. der Verrechnung hiermit der zugeordnete Relevanzoperator 18 vorzugsweise manuell über eine Eingabemaske E oder ein Menü, ein Auswahlfeld o. dgl. eingebbar, automatisch vorgebbar oder vorgegeben ist. Der Relevanzoperator 18 kann also konfigurierbar sein und auch systemseitig automatisch wählbar bzw. anpassbar sein.

Es können mehrere Ähnlichkeitsziffern 17A-17F ermittelt werden, vorzugsweise jeweils durch Verrechnung eines Suchmerkmals 4A-4F bzw. einer Suchmerkmalsausprägung 4'A-4'F mit korrespondierenden Objektmerkmalen 21A-21F bzw. Objektmerkmalsausprägungen 21'A-21'F.

Nach Ermittlung der Ähnlichkeitsziffern 17A-17F erfolgt vorzugsweise eine gemeinsame Verarbeitung bzw. Zusammenfassung der Ähnlichkeitsziffern 17A-17F, insbesondere mittels einer Funktionsvorschrift 19, vorzugsweise sodass als Ergebnis dieser Zusammenfassung ein erster Abstandswert 20, insbesondere in Form einer skalaren Größe, ermittelt wird.

Bei der Funktionsvorschrift 19 handelt es sich vorzugsweise um eine quadratische Metrik bzw. Funktion. Jedoch sind hier auch andere Verarbeitungsvorschriften möglich.

Der erste Abstandswert 20 korrespondiert besonders bevorzugt zu einer Abweichung zwischen dem Suchprofil 2 und dem Objektprofil 13 bzw. dem hierzu korrespondierenden Lösungselement 1.

Es ist bevorzugt, dass zusätzlich zum ersten Objektprofil 13 ein zweites und/oder weiteres Objektprofil 21 bereitgestellt wird, das (jeweils) ein weiteres Lösungselement 1 repräsentiert. Es ist bevorzugt, dass mehrere Lösungselemente 1 bzw. hierzu korrespondierende Objektprofile 13, 21 bereit gestellt und/oder mit dem Suchprofil 2 verrechnet bzw. verglichen werden.

Das zweite und/oder weitere Objektprofil 21 weist vorzugsweise zugeordnete Objektmerkmale 21A bis 21F mit hierzu korrespondierenden Objektmerkmalsausprägungen 21'A bis 21'F auf. Das zweite und/oder weitere Objektprofil 21 wird/werden vorzugsweise ebenfalls mit dem Suchprofil 2 verrechnet, wobei jeweils in entsprechender Weise Abstandswerte 20 ermittelt werden können.

Vorzugsweise wird ein Vergleich bzw. eine Verrechnung zwischen dem ersten Objektprofil 13 und dem zweiten bzw. weiteren Objektprofil 21 durchgeführt. Mit oder aus dem Ergebnis dieses Vergleichs oder dieser Verrechnung wird vorzugsweise mindestens eine, vorzugsweise dimensionslose, Ähnlichkeitsziffer 17 ermittelt, die entsprechend einen Abstand und/oder Unterschied zwischen dem Objektmerkmal 13A des ersten Objektprofils 13 und einem korrespondierenden Objektmerkmal 21A des zweiten bzw. weiteren Objektprofils 13 repräsentiert.

Insbesondere wird auf Basis der Ähnlichkeitsziffer 17, vorzugsweise unter Verwendung der Funktionsvorschrift 19, ein zweiter bzw. weiterer Abstandswert 22 ermittelt, der vorzugsweise eine Abweichung bzw. einen Unterschied zwischen den Objektprofilen 13, 21 bzw. den jeweils hierzu korrespondierenden Lösungselementen 1 repräsentiert.

Fig. 4 zeigt schematisch einen weiteren Aspekt des erfindungsgemäßen Verfahrens, bei dem mindestens ein Kontextelement 23A-23F vorgesehen ist.

Gemäß diesem Aspekt erfolgt bei oder durch Eingeben bzw. Zuführen des Kontextelements 23A-23F erfolgt die Erstellung des Suchprofils 2. Ein Kontextelement 23A-23F ist insbesondere ein vorbekanntes, bevorzugt ähnliches Lösungselement oder ein lösungselementartiger Ausgangspunkt für eine Suche. Ein Kontextelement 23A-23F korrespondiert also insbesondere zu einem vorbekannten Teil eines industriellen Erzeugnisses, zudem ein ähnliches oder alternatives Lösungselement 1 ermittelt werden soll. Bei dem Kontextelement 23A-23F kann es sich also insbesondere um ein oder mehrere Modelle bzw. Konstruktionsdaten von industriellen Erzeugnissen oder Teilen hiervon handeln.

Das bzw. die Kontextelemente 23A-23F werden vorzugsweise dazu verwendet, Suchmerkmale 4A-4F bzw. Suchmerkmalsausprägungen 4'A-4'F zu bestimmen. Insbesondere werden auf Basis des Kontextelements 23 die Suchmerkmale 4A bis 4F bzw. Suchmerkmalsausprägungen 4'A-4'F automatisch erfasst bzw. ermittelt werden.

Die automatische Erfassung des Suchprofils 2 ermöglicht insbesondere eine automatische Erstellung des im Zusammenhang mit Fig. 1 erläuterten Basissuchprofils 2A, so dass die in diesem Zusammenhang geschilderte kontextsensitive Erweiterung mittels des Erweiterungssuchprofils 2B zur Vervollständigung des Suchprofils 2 deutlich erleichtert bzw. beschleunigt wird.

Vorzugsweise wird eine Vielzahl bzw. Gruppe von Kontextelementen 23A bis 23F bereitgestellt, auf deren Basis, insbesondere hintereinander, mehrere korrespondierende Suchprofile 2 erfasst und/oder abgeleitet werden können. Dies gestattet eine iterative bzw. schrittweise Verfeinerung des Suchprofils 2 über gezielt ausgewählte Kontextelemente 23A bis 23F zum Auffinden gewünschter Lösungselemente 1.

Vorzugsweise werden die jeweiligen Kontextelemente 23A bis 23F manuell über den (nicht dargestellten) Nutzer bereitgestellt bzw. über eine (in Fig. 4 nicht dargestellte) Benutzerschnittstelle 26 eingegeben, eingelesen, übermittelt und/oder ausgewählt. Alternativ oder zusätzlich ist jedoch auch eine automatische bzw. rückgekoppelte Anpassung bzw. iterative Verfeinerung des Suchprofils 2 möglich.

In diesem Zusammenhang ist es bevorzugt, dass die Ähnlichkeitsziffern 17A-17F zur iterativen Anpassung bzw. Modifizierung des Suchprofils 2 verwendet werden, insbesondere mittels einer Regelungseinrichtung 24 zurückgeführt, werden. Dies gestattet eine automatische bzw. regelungstechnisch unterstützte Anpassung bzw. Modifizierung des Suchprofils 2.

Dies kann entweder durch direkte Anpassung der Suchmerkmale 4A-4F und/oder der hierzu korrespondierenden Suchmerkmalsausprägungen 4'A-4'F oder durch eine gezielte Auswahl entsprechender Kontextelemente 23A-23F zur automatischen Generierung des entsprechenden modifizierten Suchprofils 2 erfolgen.

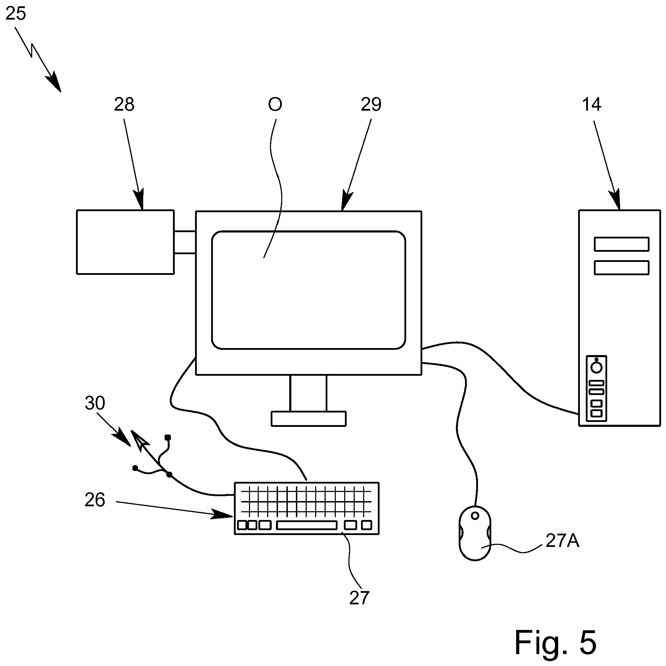

Fig. 5 zeigt in einer schematischen Darstellung ein vorschlagsgemäßes System 25 zum Auffinden von Lösungselementen 1.

Das System 25 weist vorzugsweise eine Benutzerschnittstelle 26 mit mindestens einer Eingabeeinrichtung 27 zur Eingabe und/oder zum Erfassen des Suchprofils 2 auf. Es kann auch ein Einlesegerät wie ein (3D) Scanner zur Ermittlung eines Kontextelements 23 zur Bestimmung des Suchprofils 2 vorgesehen sein. Insbesondere weist die Eingabeeinrichtung 27 eine Tastatur und/oder eine Computermaus 27A auf und/oder ist als solche ausgebildet.

Besonders bevorzugt weist das System 25 eine Speichereinrichtung 28 auf, in der mindestens ein Objektprofil 13, 21, vorzugsweise mehrere Objektprofile 13, 21, hinterlegt ist/sind, das die (jeweils) ein zugeordnetes Lösungselement 1 datentechnisch repräsentiert/repräsentieren.

Alternativ oder zusätzlich ist, insbesondere auf der Speichereinrichtung 28, ein Programm zur Ausführung des erfindungsgemäßen Verfahrens gespeichert und/oder ein Computerprogrammprodukt mit Programmcodemitteln hinterlegt, die dazu ausgebildet sind, das erfindungsgemäße Verfahren auszuführen, wenn die Programmcodemittel auf einem Computer oder durch einen Prozessor, insbesondere des Systems, ausgeführt werden.

Ferner weist das System 25 eine Anzeigeeinrichtung 29, insbesondere ein Display oder Touch-Display, auf.

Besonders bevorzugt weist das System 25 darüber hinaus eine Datenschnittstelle 30 zum Anschluss mindestens einer (nicht dargestellten) vorzugsweise mobilen Speichereinrichtung auf. Insbesondere dient die Datenschnittstelle 30 zum Erfassen bzw. Übertragen von Kontextelementen 23A - 23F zur Datenverarbeitungseinrichtung 14.

Das System 25 ist vorzugsweise dazu ausgebildet, mindestens eine Ergebnisoberfläche O zu erzeugen und/oder mittels der Anzeigeeinrichtung 29 darzustellen. Die Ergebnisoberfläche O bzw. das System 25 ist vorzugsweise dazu eingerichtet, die Ergebnisse des Verfahrens zum Auffinden der Lösungselemente 1 insbesondere graphisch zu veranschaulichen bzw. sichtbar zu machen.

Besonders bevorzugt ist das System 25 dazu ausgebildet, eine oder mehrere Konfigurationsoberflächen K zu erzeugen und/oder mittels der Anzeigeeinrichtung 29 darzustellen. Die Konfigurationsoberfläche K ist vorzugsweise dazu ausgebildet und eingerichtet, eine Erstellung bzw. Erzeugung des Suchprofils 2 als Basis zum Auffinden zugeordneter Lösungselemente 1 zu konfigurieren bzw. konfigurierbar zu machen, wie insbesondere in Zusammenhang mit Fig. 1 bis 4 beschrieben.

Das System 25 ist besonders bevorzugt dazu ausgebildet, gleichzeitig mehrere bzw. unterschiedliche Suchprofile 2 zur individuellen Konfiguration bzw. Anpassung zugeordneter Suchprofile 2 zu erzeugen.

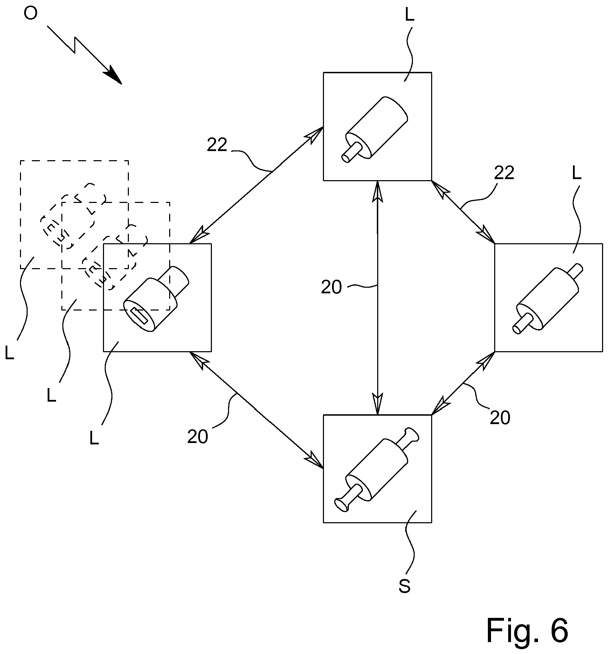

Fig. 6 zeigt in einer schematischen Darstellung ein Beispiel der Ergebnisoberfläche O des vorschlagsgemäßen Systems 25. In der Ergebnisoberfläche O sind vorzugsweise mehrere graphische Lösungselements-Äquivalente L dargestellt.

Die Lösungselements-Äquivalente L korrespondieren vorzugsweise jeweils zu Lösungselementen 1, die als Bauteile bzw. Baugruppen eine bewährte Lösung zur Umsetzung technischer Funktionen repräsentieren. Hierbei kann es vorgesehen sein, dass die Lösungselements-Äquivalente L jeweils schematische Darstellungen der Lösungselemente 1 sind oder auf sonstige Weise dazu geeignet sind, die Lösungselemente 1 graphisch zu repräsentieren oder zu kennzeichnen.

In der Ergebnisoberfläche O ist vorzugsweise vorgesehen, dass zusätzlich zu den graphischen Lösungselement-Äquivalenten L mindestens ein graphisches Suchprofil-Äquivalent S dargestellt ist.

Das Suchprofil-Äquivalent S korrespondiert vorzugsweise zu einem Bauteil bzw. einer Baugruppe, die durch die Summe der angegebenen Merkmale bzw. Eigenschaften mit den zugeordneten Spezifikationen bzw. Merkmalsausprägungen wiedergespiegelt werden bzw. repräsentiert sind. Hierzu kann vorgesehen sein, dass das Suchprofil-Äquivalent S eine schematische Darstellung der durch das Suchprofil 2 gekennzeichneten Baugruppe bzw. Komponente ist oder auf sonstige Weise dazu geeignet ist, eine Baugruppe bzw. Komponente als Vorgabe des zu ermittelten Lösungselements 1 zu repräsentieren oder zu kennzeichnen.

Vorzugsweise ist oder entspricht das Suchprofil-Äquivalent S dem Lösungselement-Äquivalenten L, wenn das Lösungselement-Äquivalenten L als oder für das Suchprofil 2 ausgewählt wird oder worden ist.

In der Ergebnisoberfläche O ist vorzugsweise vorgesehen, dass durch graphische Indikation bzw. Visualisierung eine Ähnlichkeit bzw. ein Abstand entsprechend oder korrespondierend zu einem Abstandswert 20, 22 zwischen dem Suchprofil-Äquivalent S und mindestens einem Lösungselement-Äquivalente L und/oder zwischen mindestens zwei Lösungselement-Äquivalenten L dargestellt wird.

In diesem Zusammenhang ist es bevorzugt, in der Ergebnisoberfläche O den ersten Abstandswert 20 als graphische Verbindungslinie jeweils zwischen dem Suchprofil-Äquivalent S und dem jeweiligen Lösungselement-Äquivalent L darzustellen bzw. zu verwenden, und/oder den bzw. die zweiten Abstandswert(e) 22 als graphische Verbindungslinie(n) zwischen den jeweiligen Lösungselements-Äquivalenten L darzustellen bzw. zu verwenden. Die dargestellten Pfeife können auch Teil der Ergebnisoberfläche O bilden, sind im Darstellungsbeispiel jedoch nur zu Zwecken der Erläuterung vorgesehen und in der Praxis nicht vorhanden.

Die Anzeigeeinrichtung 29 ist vorzugsweise dazu ausgebildet, Ähnlichkeiten bzw. Abweichungen der Lösungselements-Äquivalente L untereinander und/oder zum Suchprofil 2 durch eine relative Anordnung der Lösungselements-Äquivalente L graphisch darzustellen.

In diesem Zusammenhang ist es bevorzugt, dass Lösungselements-Äquivalente L, die eine große Ähnlichkeit zueinander oder zum Suchprofil 2 aufweisen, in unmittelbarer Nähe zueinander, vorzugsweise überlappend, auf der Ergebnisoberfläche O schematisch dargestellt werden oder darstellbar sind.

Vorzugsweise umfasst die vorliegende Erfindung:
- Komplexitätsreduktion in Bezug auf die Anzahl der Eigenschaften der Systemelemente.
- Komplexitätsreduktion in Bezug auf die Anzahl der zu durchsuchenden Systemelemente.
- Komplexitätsreduktion in Bezug auf die Verteilung der Datenquellen, in denen gesucht wird.
- Einbeziehen von nichtgeometrischen Eigenschaften der Systemelemente in die Suche.
- Ermöglichen einer unscharfen Suche, die auch Ergebnisse in der "Nähe" des Ausgangspunkts erlaubt (d.h.: kein explizites Einschränken des Suchraums).
- Anschauliche Visualisierung der Abweichungen der Suchergebnisse vom Suchprofil.
- Aggregation der Abweichung der Suchergebnisse vom Suchprofil.
- Sortierung der Ergebnisse (aggregiert).

Vorzugsweise werden ein oder mehrere Objektmodelle bzw. Objektprofile 13, 21 als Lösungselemente 1 verwendet. Objekte sind vorzugsweise informationstechnische Modelle von Einzelteilen, Baugruppen und kompletten Systemen/Produkten (allg.: Lösungselemente 1).

Den Objekten/Objektprofilen 13, 21 bzw. Lösungselementen 1 werden vorzugsweise Merkmale zugeordnet. Geometrische Merkmale sind z. B. Länge und Durchmesser. Beispiele für nichtgeometrische Merkmale sind der Nenndruck und die elektrische Nennspannung.

Eigenschaften bzw. Merkmale 4A-4F, 5A-5C, 13A-13F oder Merkmalsausprägungen 4'A-4'F, 5'A-5'C, 13'A-13'F werden vorzugsweise systematisch ermittelt und damit Gruppen von Objekten zugeordnet (Klassen).

Den Merkmalen 4A-4F, 5A-5C, 13A-13F (als Bezeichnung für Eigenschaften) werden Merkmalausprägungen 4'A-4'F, 5'A-5'C, 13'A-13'F zugeordnet. Das können z.B. Zahlenwerte für die Bauteillänge oder die Nennspannung sein.

Gemäß der Produktentwicklungssystematiken ist es bevorzugt, Merkmalausprägungen 4'A-4'F, 5'A-5'C, 13'A-13'F in unterschiedlichen methodischen Zusammenhängen zu verwenden und entsprechend zu kennzeichnen: Die Merkmalsausprägungen 4'A-4'F, 5'A-5'C, 13'A-13'F sind entweder tatsächlich vorhanden (validiert) oder sind noch durch die bis dato unbekannte Lösung zu erfüllen (gesucht). Daher wird den Merkmalsausprägungen 4'A-4'F, 5'A-5'C, 13'A-13'F je nach Fortschritt des Prozesses vorzugsweise ein entsprechender Status zugeordnet.

Die technische Implementierung des vorschlagsgemäßen Verfahrens basiert vorzugsweise jedenfalls zum Teil auf der Verwendung der multi-dimensionalen Skalierung (MDS).

Der Start der Suche umfasst vorzugsweise die Erfassung, Ermittlung bzw. Definition des Suchprofils 2. Das Suchprofil 2 besteht vorzugsweise aus einem Satz von Merkmalausprägungen 4'A-4'F, 5'A-5'C, 13'A-13'F und kann manuell eingegeben werden. Alternativ dazu kann ein vorgegebenes Teil bzw. Lösungselement 1 zum Start der Suche verwendet werden: Dieses Teil bzw. Lösungselement 1 dient dann als Kontext bzw. Kontextelement 23A-23F, aus welchem dann ein Suchprofil 2 abgeleitet bzw. kontextsensitiv erweitert wird. Bei Iterationen kann wiederholt auf vom Startpunkt abweichende Teile zugegriffen werden, um die Suche schrittweise zu verfeinern.

Beim Start der Suche wird die Suchsemantik vorzugsweise manuell oder automatisch festgelegt. Der technische Suchvorgang umfasst vorzugsweise die Analyse und die Aggregation der Abweichungen zwischen den Merkmalausprägungen 4'A-4'F, 5'A-5'C, 13'A-13'F des Suchprofils sowie der Objekte bzw. Lösungselemente 1, insbesondere einer durchsuchten Datenbank. Hierzu dienen vorzugsweise der MDS-Algorithmus sowie ergänzende Implementierungen.

Vorzugsweise werden die einzelnen Abweichungen pro Merkmal (bezogen auf zwei Objekte bzw. einem Objekt / Lösungselement 1 in der Datenbank und dem Suchprofil 2) erfasst. Diese Abweichungen können sich je nach Merkmal 4A-4F, 5A-5C, 13A-13F auf geometrisch-physikalische Größen beziehen (z.B. Durchmesser, Druck) oder auch auf textuelle Beschreibungen, die sich vorwiegend in ihrer Semantik voneinander unterscheiden.

Anschließend erfolgt vorzugsweise eine Transformation gemäß einer Transformationsvorschrift, die die tatsächlichen Unterschiede zwischen den Merkmalausprägungen 4'A-4'F, 5'A-5'C, 13'A-13'F (absolute Differenz) in einen relativem Vergleich oder per Interpretationsvorschrift für die Semantik in eine dimensionslose Ähnlichkeitsziffer (mathematisch: Abstand) auf einer kardinalen Skala überführt. Vorzugsweise erfolgt dies informationstechnisch das mit Hilfe von Operatoren. Dieser Vorgang ist vergleichbar mit oder stellt die Anwendung einer Bewertungsvorschrift dar, beispielsweise wie sie auch im Rahmen von Methoden wie der Nutzwertanalyse angewendet wird.

Der Einsatz von Operatoren erlaubt auch eine Gewichtung. Diese Gewichtung wird korrespondierend zur Relevanz des Merkmals ausgeprägt. Damit sind auch unterschiedliche Semantiken, die sich aus der Anwendungslogik generieren, abbildbar. Die Relevanzen sind vorzugsweise zu erfassen und die Operatoren entsprechend zu konfigurieren.

Pro Beziehung zwischen zwei Objekten bzw. Lösungselementen 1 liegen dann m verschiedene Ähnlichkeitsziffern vor. Die, insbesondere ganze bzw. natürliche Zahl m entspricht hierbei der Anzahl der verglichenen Merkmale je nach Suchprofil. Die m Ähnlichkeitsziffern 17A-17F /Abstände werden vorzugsweise mit Hilfe von Aggregationsmethoden ("z.B. Ermittlung der quadratischen Distanz") zu einer einzigen skalaren Größe pro Beziehung zwischen zwei Objekten bzw. Lösungselementen 1 zusammengefasst.

Das Ergebnis des technischen Suchvorgangs ist somit ein Abstand als skalare Größe, der die Ähnlichkeit (als Aggregation der Unterschiede) zusammenfasst. Pro Beziehung zwischen zwei Objekten bzw. Lösungselementen 1 gibt es einen Abstandswert. Damit wird vorzugsweise ein Aggregationsprozess durchgeführt, nämlich die Reduktion der Ähnlichkeit(en) zwischen zwei Objekten in Bezug auf m Merkmale auf eine Kennziffer.

Die Ergebnisdarstellung setzt vorzugsweise unmittelbar auf den Ausgangsergebnissen des technischen Suchvorgangs auf. Im Rahmen der Ergebnisdarstellung wird der zweite Schritt der Aggregation durchlaufen. Die (ganze bzw. natürliche) Zahl n ist hierbei die Anzahl der gefundenen Objekte bzw. Lösungselemente 1.

Die Darstellung der Ergebnisse erfolgt bevorzugt graphisch (und nicht in Tabellenform). Dazu werden vorzugsweise die n(n-1)/2 Abstände (entspricht Ähnlichkeiten) in einer zweidimensionalen Darstellung, also in der Ebene angezeigt. Mathematisch würde eine korrekte Darstellung n-1 Dimensionen umfassen, da so eine verzerrungsfreie Abbildung der Abstände möglich ist. Vorzugsweise wird ein MDS-Graph verwendet, so dass die Anzahl der Dimensionen auf zwei reduziert wird. Hierdurch gelingt eine Verdichtung der Anzeige durch die Reduktion der Dimensionen (Aggregationsschritt 2). Bei der Berechnung wird dabei der systemimmanente Fehler (Verzerrung) möglichst gering gehalten.

Das Ergebnis der Darstellung sind vorzugsweise in der Ebene positionierte graphische Repräsentationen von Objekten bzw. Lösungselementen 1. Die relative Positionierung dieser Objekte zueinander liefert dann Aufschluss über die Ähnlichkeitsbeziehungen zwischen ihnen. Aus Sicht des Anwenders gelten dann folgende einfache Regeln: Ähnliche Objekte "ziehen sich an"; unähnliche Objekte "stoßen sich ab". Besonders ähnliche Objekte werden übereinanderliegend dargestellt. Dem Ausgangs-Suchprofil ähnliche Objekte bzw. Lösungselemente 1 liegen in der Nähe des Ausgangsprofils bzw. Suchprofils 2, das auch dargestellt werden kann.

Die Ergebnisanzeige bzw. Ergebnisoberfläche O beinhaltet vorzugsweise weitere Funktionen, die vor allem zur Navigation und zur Erleichterung der Anwendung dienen, wie Zoom- und Verschiebungsmöglichkeiten, Ein-/Aus- blenden etc. Darüber hinaus sind weiterhin Zugriffe auf alle Objekte bzw. Lösungselement 1 mit deren Merkmalausprägungen 13'A-13'F möglich.

Vorzugsweise erfolgt dann eine grafische Darstellung auf einem Anzeigegerät zur Ermöglichung einer Interpretation durch den Anwender.

Als Fallbeispiel wird im Folgenden ein Kraftstoffsystem als industrielles Erzeugnis gewählt. Das Beispiel bietet einen exemplarischen Ausschnitt aus der Produktstruktur von Automotive-Komponenten und daher eine hinreichende Zahl relevanter Merkmale 4A-4F, 5A-5C, 13A-13F, die im Sinne von funktionalen Spezifikationen bzw. Anforderungen für den Entwicklungs- und Value-Chain-Prozess in dieser Branche bedeutsam sein können.

Im Folgenden werden einige technische Sachverhalte vereinfacht dargestellt, beispielsweise wird die praktisch relevante Unterscheidung zwischen Hoch- und Niederdrucksystem vernachlässigt. Ebenso sind die exemplarisch aufgeführten Merkmale 4A-4F, 5A-5C, 13A-13F nicht vollständig, sondern dienen nur zur Illustration der Sachverhalte. Die Merkmale 4A-4F, 5A-5C, 13A-13F werden darüber hinaus zur Darstellung verschiedener Sachverhalte fallweise variiert, bleiben aber exemplarisch. Ferner sind nicht alle Komponenten aufgeführt, wie beispielsweise das Einspritzsystem. Das "Kraftstoffsystem" gliedert sich im Beispiel in die Subsysteme "Kraftstofftank", "Leitungen" und "Kraftstoffpumpe". Allen Subsystemen sind beispielhaft Spezifikationen als Objektmerkmalsausprägungen 13'A-13'F zugeordnet.

Im Folgenden werden die Verbesserungen in Bezug auf den gesamten Produktentwicklungsprozess und die darin eingebetteten Such- und Konfigurationsprozesse dargestellt.

Das Beispiel zeigt anhand des Systemelements "Kraftstoffpumpe", wie das Suchprofil durch die Verwendung eines Startteils bzw. Kontextelements 23A-23F automatisch und damit kontextsensitiv erweitert wird. Die Kontextsensitivität bezieht sich in erster Linie auf den Ausgangspunkt der Suche, der allerdings im Suchverlauf in gezielter, iterativer Weise variiert werden kann. Durch die Wahl des Ausgangsteils bzw. Kontextelements 23A-23F wird ein Suchprofil 2 generiert und für den weiteren Suchvorgang verwendet: Dieses Suchprofil 2 besteht vorzugsweise aus einem Satz von Merkmalen 4A-4F, 5A-5C, 13A-13F (u. A. funktionalen Spezifikationen) und deren Ausprägungen 4'A-4'F, 5'A-5'C, 13'A-13'F.

Zu vorgegebenen Merkmalen 4A-4F, 5A-5C, 13A-13F werden vorzugsweise zur Ergänzung des Suchprofils2 danach das System als klassenspezifische Merkmale 4A-4F, 5A-5C, 13A-13F automatisiert hinzufügt.

Die Verwendung eines Ausgangsteils bzw. Kontextelements 23A-23F zur Suche bewirkt zum einen, dass durch die Ableitung des Suchprofils 2 eine unmittelbare zeitliche Entlastung des Anwenders erfolgt. Damit werden bereits bei der ersten Iteration Aufwände eingespart. Darüber hinaus wird durch die Zuordnung der Suchkriterien in Form klassenspezifischer Merkmale 4A-4F, 5A-5C, 13A-13F bzw. Merkmalsausprägungen 4'A-4'F, 5'A-5'C, 13'A-13'F ad hoc die fachlich korrekte Erfassung des Suchprofils 2 sichergestellt. Damit sind der sich anschließende technische Suchvorgang sowie die Ergebnisinterpretation automatisch von deutlich höherer Qualität, was die Wahrscheinlichkeit für gute Suchergebnisse maßgeblich erhöht.

Das Beispiel zeigt anhand des Systemelements "Kraftstoffpumpe", dass die geometrischen (Such-)Merkmale nur einen Bruchteil der Spezifikationen ausmachen. Darüber hinaus gibt es eine große Anzahl nichtgeometrischer (Such-)Merkmale. Die vorliegende Erfindung erlaubt dahingehend vorzugsweise die integrative Suche über sowohl geometrische als auch nichtgeometrische (funktionale) (Such-)Merkmale 4A-4F, 5A-5C, 13A-13F. Weitere, in integrierender Weise wirkende Verbesserungen beziehen sich primär auf den Prozess bzw. die Systeme.

Durch den vorgestellten Ansatz erfolgt vorzugsweise eine Integration auf mehreren Ebenen:

Einerseits erfolgt eine Integration vorzugsweise über mehrere Datenquellsysteme hinweg. Bereits damit gelingt eine Reduktion der isolierten Suchvorgänge auf einen einzigen, zentralen Vorgang.

Ferner bezieht die Suche in integrativer Art vorzugsweise sowohl geometrische als auch nichtgeometrische Suchkriterien ein. In horizontaler Richtung, also entlang des Suchprozesses besteht die Verbesserung zunächst darin, dass die Eingabe eines Suchprofil 2 ausreichend ist, auch wenn mehrere Suchprofile 2 eingebbar sein oder eingegeben werden können.

Alternativ oder zusätzlich ist die Verwendung eines "Startteils" bzw. Kontextelements 23A-23F möglich, aus dem ein Suchprofil 2 abgeleitet wird.

Der technische Suchprozess wird vorzugsweise auf das (vormals auf verschiedene Systeme verteilte) Objektspektrum bzw. Lösungselement-Spektrum angewendet. Auf dieses bezogen werden somit Lösungselemente 1 gesucht, die eine Ähnlichkeit sowohl in funktionaler als auch in geometrischer Hinsicht aufweisen.

Die Ergebnisanzeige umfasst schließlich vorzugsweise alle Ergebnisse in einer einzigen Darstellung. Insgesamt wird damit die Komplexität maßgeblich reduziert. Insbesondere weist der neue Suchprozess einen deutlich höheren Integrationsgrad auf als der herkömmliche Prozess: Statt mehrerer isolierter Suchvorgänge in verschiedenen Systemen nach jeweils verschiedenen Kriterien verläuft die Suche in einer einzigen Umgebung nach allen relevanten Kriterien.

Vorzugsweise erfolgt eine Erhöhung des semantischen Niveaus: Die beschriebene Kontextsensitivität zielt primär auf die Beschleunigung und erhöhte Sicherheit bei der Erfassung von Suchprofilen 2 ab und zielt damit auf den Ausgangspunkt der Suche. Die Erhöhung des semantischen Niveaus zielt dagegen auf eine Gewichtung von (Such-)Merkmalen - innerhalb des ausgewählten Suchprofils 2 - gemäß ihrer Bedeutung aus der übergeordneten, oft rollenorientierten Semantik heraus ab.

Neben der rollenspezifischen Relevanz (wie u. a. Vertrieb, Prozessentwicklung) gibt es einige weitere übergeordnete, beispielsweise prozess- oder produktgetriebene Einflussbereiche.

Das Beispiel zeigt anhand des vollständigen "Kraftstoffsystems", das verschiedene funktionale Spezifikationen für unterschiedliche Anwendergruppen relevant sind, die jeweils eigene Anforderungen an das Auffinden von Teilen haben, also nach differenzierten Gewichtungen (Schwerpunkten) suchen.

Beispielsweise sucht der Vertrieb primär nach Daten aus dem kaufmännischen Bereich, aber auch nach übergeordneten Spezifikationen, die das Produkt bzw. Systemelement am Markt repräsentieren. Hingegen sucht der Arbeitsvorbereiter bzw. Fertigungsprozessentwickler nach Eigenschaften, die die Fertigung maßgeblich determinieren. Diese beiden beispielhaft genannten Gruppen folgen also ihrer eigenen Such-Semantik. Im Beispiel ist dargestellt, welche Spezifikationen jeweils für die Gruppen relevant sind.

Zur Abbildung der Semantik in der oben kurz skizzierten Art und Weise ist es bevorzugt, Regeln für eine spezifische Gewichtung zu erfassen und abzubilden. Dieses Regelwerk definiert beispielsweise:
- Rollenspezifische Semantiken (z.B. Vertrieb, Entwicklung, Prozessentwicklung)
- Produktspezifische Semantiken (z.B. Konfigurationssemantik)
- Prozessspezifische Semantiken (z.B. Einflüsse Produkt -> Produktionsprozess)

Die automatisierte Gewichtung der Suchkriterien berücksichtigt vorzugsweise bereits während des Ablaufs des technischen Suchprozesses inhärente Zielsetzungen des Anwenders. Mit "inhärent" sind an dieser Stelle vorzugsweise logische Zusammenhänge aus dem Kontext des Anwenders gemeint, die an die Ausprägung von (Such-)Merkmalen gekoppelt sind.

Beispielsweise kann ein bestimmter Gehäusewerkstoff die Kosten für die Anpassung bzw. Neuentwicklung des Fertigungsverfahrens signifikant erhöhen, da ggf. Fertigungsprozesse umgestellt werden müssen. Damit ist dieses (Such-)Merkmal 4A-4F, 5A-5C, 13A-13F für den Prozessentwickler besonders bedeutsam. Ähnliches gilt beispielsweise für den Vertrieb: Beispielsweise in aller Regel nur wenige, "äußere" Produktmerkmale (also (Such-)Merkmale 4A-4F, 5A-5C, 13A-13F auf Systemebene; "Alleinstellungsmerkmale") entscheidend für die Marktpositionierung des Produktes.

Insgesamt wird durch die Gewichtung vorzugsweise das semantische des Suchvorgangs deutlich angehoben. Dies soll eine Analogie illustrieren: Die ersten CAD-Systeme erlaubten lediglich eine (mühsame) Abbildung grundlegender Geometrieelemente wie Punkt, Linie, Winkel etc. im System. Erst mit der schrittweisen Entwicklung zu volumenorientierten Systemen sowie dem Einsatz von Parametrik und Features ("intelligente" Konstruktionselemente) wurde die Anwendersemantik sukzessive in die Entwurfsmethoden einbezogen, was zu einem signifikantem Anstieg der Konstruktionsgeschwindigkeit und damit der Leistungsfähigkeit führte.

Vorzugsweise werden Verbesserungen im Suchprozess durch graphische und automatisiert aggregierte Ergebnisdarstellung erreicht. Zur Interpretation der Ergebnisse erfolgt vorzugsweise eine automatisierte Auswertung bzw. Darstellung in folgender Form: Die Ähnlichkeiten zwischen dem Suchprofil und den Ergebnissen (=ähnlichen Lösungselementen / Teilen) werden als Vektor bzw. Abstand in der Ebene dargestellt und sind damit intuitiv leicht erfass- und interpretierbar.

Die Ergebnisdarstellung umfasst im Vergleich zum bestehenden Prozess vorzugsweise nicht nur geometrische (Such-)Merkmale 4A-4F, 5A-5C, 13A-13F, sondern auch nichtgeometrische und umfasst somit auch funktionale Spezifikationen bzw. (Such-)Merkmale 4A-4F, 5A-5C, 13A-13F. Durch diese Bündelung in einer einzigen Darstellung werden also vorzugsweise Suchstrategien ermöglicht, die nicht nur Einzelteile bezüglich ihrer Geometrie erfassen, sondern auch Baugruppen und Systeme, die primär durch nichtgeometrische (Such-)Merkmale 4A-4F, 5A-5C, 13A-13F (funktionale Spezifikationen und Anforderungen) repräsentiert werden. Damit wird die Suche zum einen auf deutlich breitere Anwendungsfelder ausgedehnt und zum anderen in seiner Komplexität maßgeblich reduziert.

Dass Lösungselemente 1 auch in Bezug auf nichtgeometrische (Such-)Merkmale 4A-4F, 5A-5C, 13A-13F unterschieden werden führt beispielsweise dazu, dass geometrisch identische Kraftstoffpumpen, die sich beispielsweise nur durch die Ausprägung des (Such-)Merkmals "Betriebsspannung" unterscheiden, in der Ergebnisdarstellung klar voneinander abgegrenzt werden. Insgesamt bildet der neue Suchprozess die methodischen und praktischen Bedingungen bei der Suche viel gezielter ab als der herkömmliche Prozess und ist damit deutlich effektiver und effizienter.

Beispielsweise erfordert der Werkstoff "Kunststoff" i.d.R. die Entwicklung neuer Spritzguss-Werkzeuge, während der Werkstoff "Blech" eine Fertigung auf vorhandenen Maschinen (beispielsweise sequentielles Stanzen und Biegen) erlaubt.

Die zuvor beschriebenen Aspekte sind vorzugsweise unabhängig voneinander realisierbar und untereinander kombinierbar.

Im Sinne der vorliegenden Erfindung werden Begrifflichkeiten vorzugsweise wie Folgt verstanden:

Eine Anforderung im Sinne der vorliegenden Erfindung ist vorzugsweise:
1. eine Eigenschaft oder Fähigkeit, die von einem Benutzer (Person oder System) zur Lösung eines Problems oder zur Erreichung eines Ziels benötigt wird, und/oder
2. eine Eigenschaft oder Fähigkeit, die ein System oder Teilsystem erfüllten oder besitzen soll, um einen Vertrag, eine Norm, eine Spezifikation oder andere, formell vorgegebene Dokumente zu erfüllen, und/oder
3. eine dokumentierte Repräsentation einer Eigenschaft oder Fähigkeit gemäß (1) oder (2), und/oder
4. Eine noch nicht verifizierte Produkteigenschaft.

Eine Anforderung stellt vorzugsweise ein Suchmerkmal 4A-4F bzw. eine Suchmerkmalsausprägung 4'A-4'F dar oder umgekehrt.

Die Abkürzung CAD steht für Computer Aided Design. Für die Domäne "Mechanik" werden für oder in der vorliegenden Erfindung MCAD-Systeme eingesetzt, für den Bereich Elektrotechnik ECAD-Systeme. Diese Systeme werden auch als Autorensysteme bezeichnet. Die vorliegende Erfindung betrifft vorzugsweise solche Systeme, wobei Lösungselemente 1 Datensätze oder Objekte hierfür darstellen oder sein können.

Eine funktionale Spezifikation im Sinne der vorliegenden Erfindung ist/sind vorzugsweise (Such-)Merkmale von Objekten bzw. Lösungselementen 1, die Eigenschaften aus methodischer Sicht beschreiben. Insbesondere sind funktionale Spezifikationen bzw. Suchmerkmale 4A-4F oder Suchmerkmalsausprägungen 4'A-4'F eine Teilmenge von Anforderungen. Funktionale Spezifikationen lassen sich sehr oft durch (einfache) (Such-)Merkmale definieren.

Klassifizierungen im Sinne der vorliegenden Erfindung sind vorzugsweise Zuordnungen von Objekten bzw. Lösungselementen 1 zu Klassen und die Ausprägung klassenspezifischer (Such-)Merkmale 4A-4F, 5A-5C, 13A-13F. Unter einer Klasse im Sinne der vorliegenden Erfindung ist vorzugsweise eine Gruppe von industriellen Produkten oder Lösungselementen 1 zu verstehen.

Ein Kontext im Sinne der vorliegenden Erfindung ist vorzugsweise ein Startpunkt einer Suche, insbesondere durch Identifikation bzw. Markieren von Teilen zur Ähnlichkeitssuche.

Ein Lösungselement 1 im Sinne der vorliegenden Erfindung stellt vorzugsweise eine realisierte, bewährte Lösung zur Erfüllung einer Funktion eines Industrieerzeugnisses dar. Diese Lösung kann elementar sein wie die Maschinenelemente Schraube oder Welle-/Nabe-Verbindung, aber auch sehr komplex wie ein Antriebssystem, bestehend aus mechanischen, elektrischen und elektronischen Baugruppen und Regelungstechnik/Software. Je nach Fortschritt im Entwicklungsprozess weisen die Lösungselemente 1 unterschiedliche Aspekte auf. Beispiele für Aspekte sind Anforderungen, Verhalten und Gestalt. Ein Industrieerzeugnis besteht in der Regel aus einer Kaskade von Lösungselementen.

Eine MDS (Multidimensionale Skalierung), auch "Ähnlichkeitsstrukturanalyse" genannt, dient vorzugsweise dazu, Objekte räumlich so zu positionieren, dass die Abstände zwischen den Objekten bzw. Lösungselementen 1 möglichst präzise den erhobenen Ähnlichkeiten entsprechen. Das vorschlagsgemäße Verfahren umfasst vorzugsweise eine solche MDS.

(Such-)Merkmale 4A-4F, 5A-5C, 13A-13F im Sinne der vorliegenden Erfindung sind vorzugsweise Eigenschaften (Attribute) von Objekten bzw. Lösungselementen 1.

(Such-)Merkmalausprägungen 4'A-4'F, 5'A-5'C, 13'A-13'F im Sinne der vorliegenden Erfindung sind vorzugsweise Werte, die bestimmten Merkmalen zugeordnet werden können.

PLM steht für Product Lifecycle Management. PLM-Systeme verwalten Daten und Prozesse entlang dieses Produktlebenszyklus' vorwiegend anhand der Produktstruktur. Die vorliegende Erfindung umfasst vorzugsweise ein PLM-System oder bildet Teil eines PLM-Systems. Mit PLM-Systemen ist vorzugsweise die Beschreibung des hierarchischen Aufbaus von Industrieerzeugnissen gemeint. Typischerweise ist die Produktstruktur in Stücklisten dokumentiert. PLM- Systeme verwenden die Produktstruktur als zentrales Konstrukt zur Verwaltung von Produktdaten.

Der Begriff Sachmerkmal im Sinne der vorliegenden Erfindung folgt vorzugsweise der Definition nach DIN 4000 (Sachmerkmal-Leiste) und meint insbesondere dasselbe, wie der Begriff "(Such-)Merkmal".

Eine Semantik im Sinne der vorliegenden Erfindung wählt vorzugsweise aus dem Suchprofil, welches durch den Kontext vorgegeben ist, die Dinge aus, die innerhalb der Semantik wichtig sind. Die Semantik gewichtet die durch den Kontext vorgegebenen Suchprofile nach Rollen- oder Anwendungsfall spezifischen Relevanzen. Eine Semantik wird vorzugsweise in einem Verfahrensschritt oder Teil des vorschlagsgemäßen Verfahrens eingesetzt.

Ein Suchprofil 2 im Sinne der vorliegenden Erfindung gruppiert vorzugsweise eine Reihe von spezifischen Ausprägungen 4'A-4'F, 5'A-5'C, 13'A-13'F von (Such-)Merkmalen 4A-4F, 5A-5C, 13A-13F, nach denen gesucht wird.

Zusammenfassend ist folgendes Verständnis bevorzugt:

Suchmerkmale sind Merkmale, die in einem Suchprofil verwendet werden. Über Suchmerkmale werden Eigenschaften von Objekten bzw. Lösungselementen gesucht, z.B. Länge, Durchmesser, Leistung, 3D-Gestalt.

Es gibt vorzugsweise mindestens zwei Arten von Merkmalen
1. Konkrete, spezifische, explizite, eindeutig, messbare, direkt abbildbare Suchmerkmale: Sämtliche vorstellbaren Suchmerkmalausprägungen eines konkreten Suchmerkmals sind bevorzugt auf nominalen, ordinalen oder kardinalen Skalen direkt (ohne Transformation) abbildbar. Das heißt, der Wert, der für eine Suchmerkmalsausprägung eingegeben, aus einer Liste ausgewählt oder aus dem Kontext ermittelt wird entspricht dem Wert, der gespeichert und/oder verwendet wird. Beispiele sind hier alle technischen und funktionalen Eigenschaften sowie geometrische Dimensionen von Lösungselementen.
2. Abstrakte, umfassende, implizite, zu interpretierende, nicht messbare, nicht direkt abbildbare Suchmerkmale. Bei abstrakten Suchmerkmalen ist es vorzugsweise nicht möglich, alle vorstellbaren Suchmerkmalausprägungen direkt (ohne Transformation) einzugeben bzw. aus einer vordefinierten Liste auszuwählen. Die Suchmerkmalausprägungen entstehen daher nicht durch explizite Eingabe oder Auswahl, sondern durch einen impliziten Vorgang, z.B. Skizzieren eines 3D-Modells oder Auswahl eines Teils, dessen 3D-Modell Ausgangspunkt für eine Suche ist. Ein Algorithmus transformiert diesen impliziten Vorgang vorzugsweise in eine Suchmerkmalausprägung. Beispiele sind die 3D-Gestalt als Ganzes, oder (beliebig kleine) 3D-Teilgeometrien (Ausschnitte) der gesamten 3D-Gestalt. Generell kann jede Gestalt beliebige Formen und Formvarianten annehmen.

Eine Suchmerkmalausprägung ist vorzugsweise ein Wert, ein Wertebereich oder ein Datensatz mit dem ein Suchmerkmal im Suchprofil spezifiziert wird.

Suchmerkmalausprägungen konkreter Suchmerkmale werden vorzugsweise entweder manuell eingegeben, aus einer Liste zulässiger Werte, Wertebereiche oder Datensätze ausgewählt oder ergeben sich aus dem Kontext automatisch.

Suchmerkmalausprägungen abstrakter Suchmerkmale werden vorzugsweise durch eine der folgende Aktionen spezifiziert:
- Skizzieren einer 3D-Gestalt oder einer 3D-Teilgeometrie. Ein Algorithmus wandelt die 3D-Gestalt oder 3D-Teilgeometrie in einen Datensatz um.
- Auswahl eines Lösungselementes oder Auswahl einer 3D-Teilgeometrie eines Lösungselementes. Ein Algorithmus wandelt die 3D-Gestalt oder 3D-Teilgeometrie in einen Datensatz um.

Es sind vorzugsweise zwei Verfahren zur Ähnlichkeitssuche möglich:

### 1. Geometrische Ähnlichkeitssuche

Zur geometrischen Ähnlichkeitssuche werden in die Ermittlung der Ähnlichkeit ausschließlich "abstrakte" Merkmale einbezogen. Der Ähnlichkeitswert wird aus der "Differenz" der Datensätze der Merkmalsausprägung der abstrakten Merkmale über einen komplexen Algorithmus ermittelt.

Die "konkreten" Merkmale werden lediglich als Filterbedingung (ausschließende bzw. einschließende Bedingung) verwendet. Sie werden jedoch in die Ermittlung des Ähnlichkeitsmaßes nicht einbezogen.

### 2. Ähnlichkeitssuche über "konkrete" (Such-)Merkmale

Ähnlichkeitssuchen über konkrete (Such-)Merkmale berücksichtigen vorzugsweise folgende Methoden:
- Exakte Übereinstimmungen (nominal, ordinal oder kardinal skalierter (Such-)Merkmalsausprägungen)
- Maximale Abweichungen (ordinal oder kardinal skalierter (Such-)Merkmalsausprägungen)
- Toleranzen in Form von prozentualen Abweichungen (kardinal skalierte (Such-)Merkmalsausprägungen).

Diese werden, vorzugsweise isoliert, auf die (Such-)Merkmale angewendet. Erfüllt ein (Such-)Merkmal eines Lösungselementes nicht die Vorgabe des Suchprofils, wird das Lösungselement vorzugsweise nicht als ähnlich erkannt. Ein (Such-)merkmalübergreifendes Ähnlichkeitsmaß, welches die Ähnlichkeit auf einen kardinalen Wert verdichtet, wird nicht verwendet.
3. Vorschlagsgemäß ist es bevorzugt, die Geometrische Ähnlichkeitssuche unter Verwendung konkreter (Such-)Merkmale zu ergänzen, sodass die konkreten und die abstrakten (Such-)Merkmale gemeinsam verwendet werden, insbesondere um Ähnlichkeitsziffern und/oder Abstände zu ermitteln.

### Bezugszeichenliste:

- 1: Lösungselement
- 2: Suchprofil
- 2A: Basissuchprofil
- 2B: Erweiterungssuchprofil
- 3: Auswahlwerkzeug
- 4A - 4F: Suchmerkmal
- 4'A - 4'F: Suchmerkmalsausprägung
- 5A - 5C: Erweiterungssuchmerkmal
- 5'A - 5'C: Erweiterungsmerkmalausprägung
- 6: Validierungsmittel
- 7: geometrisches Suchmerkmal
- 8: funktionales Suchmerkmal
- 9: physikalisches Suchmerkmal
- 10: produktspezifisches Suchmerkmal
- 11: fertigungsspezifisches Suchmerkmal
- 12: wirtschaftsspezifisches Suchmerkmal
- 7'-12': spezifische Suchmerkmalsausprägungen
- 13: erstes Objektprofil
- 13A - 13F: Objektmerkmal (erstes Objektprofil)
- 13'A - 13'F: Objektmerkmalsausprägung (erstes Objektprofil)
- 14: Datenverarbeitungseinrichtung
- 15: Pfeil
- 16: Minus-Symbol
- 17A - 17F: Ähnlichkeitsziffer
- 18A - 18F: Relevanzoperator
- 19: Funktionsvorschrift
- 20: erster Abstandswert
- 21: zweites Objektprofil
- 21 A - 21 F: Objektmerkmal (zweites Objektprofil)
- 21'A - 21'F: Objektmerkmalsausprägung (zweites Objektprofil)
- 22: zweiter Abstandswert
- 23A - 23F: Kontextelement
- 24: Regelungseinrichtung
- 25: System
- 26: Benutzerschnittstelle
- 27: Eingabeeinrichtung
- 27A: Mouse
- 28: Speichereinrichtung
- 29: Anzeigeeinrichtung
- 30: Datenschnittstelle

- E: Eingabemaske
- G: klassenspezifische Gruppe
- I: Initiierungsmittel
- K: Konfigurationsoberfläche
- L: graphisches Lösungselements-Äquivalent
- M1: Suchprofilerweiterungsmodul
- M2: Suchmodul
- M3: Gewichtungsmodul
- O: Ergebnisoberfläche
- S: graphisches Suchprofil-Äquivalent

## Patentansprüche

1. System (25) zum Auffinden von Lösungselementen (1), vorzugsweise von technischen Bauteilen oder Baugruppen eines industriellen Erzeugnisses, insbesondere zur Verwendung in einem CAD-System für die Konstruktion, Konfiguration und/oder automatisierte Herstellung des industriellen Erzeugnisses, wobei das Auffinden der Lösungselemente (1) mittels einer automatisierten Suche auf Basis eines Suchprofils (2) erfolgt,
wobei das System (25) mindestens eine Datenverarbeitungseinrichtung (14) zur Verarbeitung des Suchprofils (2) und eine Speichereinrichtung (28), insbesondere Datenbank, aufweisend zu den Lösungselementen (1) korrespondierende Objektprofile (13), aufweist und
wobei das Suchprofil (2) mindestens ein Suchmerkmal (4A-4F, 5A-5C, 7, 8) zur Charakterisierung einer möglichen Eigenschaft eines Lösungselements (1) und eine zugeordnete Suchmerkmalsausprägung (4'A-4'F, 5'A-5'C, 7', 8') zur Spezifizierung des Suchmerkmals (4A-4F, 5A-5C, 7, 8) aufweist,
**dadurch gekennzeichnet,**
**dass** das Suchmerkmal (8) und eine zugeordnete Suchmerkmalsausprägung (8') zu einer konkreten, spezifischen, expliziten, eindeutigen, messbaren, und/oder direkt - insbesondere auf einer Skala - abbildbaren Eigenschaft, und/oder zu einer Eigenschaft, die nicht die geometrische Topographie charakterisiert bzw. keine Transformation eines Modells eines Lösungselements (1) oder eines Teils eines Lösungselements (1) ist, korrespondieren, im Folgenden nicht-geometrisches Suchmerkmal (8) bzw. nicht-geometrische Suchmerkmalsausprägung (8) genannt, und dass das System (25) ein Suchmodul (M2) aufweist, das dazu ausgebildet ist, mit einer Suche nach der nicht-geometrischen Suchmerkmalsausprägung (8') Abstandswerte (20, 22) zu ermitteln, die Ähnlichkeiten oder Unähnlichkeiten des Suchprofils (2) mit den jeweiligen Objektprofilen (13) repräsentieren; und/oder
**dass** das System (25) ein Suchprofilerweiterungsmodul (M1) aufweist, das dazu ausgebildet ist, mittels eines oder mehrerer vorgegebener Suchmerkmale (4A-4F, 7, 8) und/oder Suchmerkmalsausprägungen (4'A-4'F, 7', 8') ein Erweiterungsmerkmal (5A-5C) und eine diesem zugeordnete Erweiterungsmerkmalsausprägung (5'A-5'C) zu ermitteln und das Suchprofil (2) um die Erweiterungsmerkmalsausprägung (5'A-5'C) zu ergänzen, wodurch die Erweiterungsmerkmalsausprägung (5'A-5'C) eine zusätzliche Suchmerkmalsausprägung (4'A-4'F, 7', 8') des Suchprofils (2) bildet; und/oder
**dass** das System (25) mehrere Suchmerkmale (4A-4F, 5A-5C, 7, 8) mit Suchmerkmalsausprägungen (4'A-4'F, 5'A-5'C, 7', 8') aufweist, und dass das System (25) ein Gewichtungsmodul (M3) aufweist, das dazu ausgebildet ist, eines oder mehrere der Suchmerkmale (4A-4F, 5A-5C, 7, 8) und/oder Suchmerkmalsausprägungen (4'A-4'F, 5'A-5'C, 7', 8') und/oder ein hiermit ermitteltes Ergebnis über einen die Relevanz des Suchmerkmals (4A-4F, 5A-5C, 7, 8) repräsentierenden Relevanzoperator (18A-18F) zu gewichten, wodurch die Ermittlung von Abstandswerten (20, 22), die Ähnlichkeiten oder Unähnlichkeiten des Suchprofils (2) mit den jeweiligen Objektprofilen (13) und/oder der Objektprofile (13) zueinander repräsentieren, beeinflusst wird.

2. System nach Anspruch 1, **dadurch gekennzeichnet, dass** mindestens eines der Suchmerkmale (4A-4F, 5A-5C, 7, 8) des Suchprofils (2) ein abstraktes, umfassendes, implizites, zu interpretierendes, nicht direkt messbares, und/oder nicht direkt - insbesondere auf einer Skala - abbildbares, und/oder eine geometrische Topographie charakterisierendes bzw. durch eine Transformation eines Modells eines Lösungselements (1) oder eines Teils eines Lösungselements (1) gebildetes Suchmerkmal (7) ist, im Folgenden geometrisches Suchmerkmal (7) genannt, vorzugsweise wobei das geometrische Suchmerkmal (7) eine geometrische Topographie betrifft, mit einer korrespondierenden geometrischen Suchmerkmalsausprägung (7'), die die geometrische Topographie charakterisiert.

3. System nach Anspruch 2, **dadurch gekennzeichnet, dass** das Suchmodul (M2) dazu ausgebildet ist, mit einer Suche gemeinsam nach der geometrischen Suchmerkmalsausprägung (7') und der nicht-geometrischen Suchmerkmalsausprägung (8') im selben Schritt und/oder in derselben Speichereinrichtung (28) Abstandswerte (20, 22) zu ermitteln, die Ähnlichkeiten oder Unähnlichkeiten des Suchprofils (2) mit den jeweiligen Objektprofilen (13) repräsentieren.

4. System nach Anspruch 2 oder 3, **dadurch gekennzeichnet, dass** die geometrische Topographie das Erscheinungsbild eines korrespondierenden Lösungselements (1) ist, wobei die geometrische Suchmerkmalsausprägung (7') das Erscheinungsbild, in Form eines oder einer Gruppe von automatisch generierten oder generierbaren Kennwerten, insbesondere in Form eines oder mehrerer Vektoren, repräsentiert, wobei die Kennwerte durch Transformation eines 3D-Modells des Lösungselements (1) erzeugt werden oder erzeugbar sind.

5. System nach einem der voranstehenden Ansprüche, **dadurch gekennzeichnet, dass** das System (25) eine Speichereinrichtung (28), insbesondere eine Datenbank, aufweist, in der mehrere Objektprofile (13) hinterlegt sind, die zur Repräsentation von Lösungselementen (1) ausgebildet sind, und dass das System (25) dazu ausgebildet ist, das Suchprofil (2) mit den Objektprofilen (13) und die Objektprofile (13) untereinander zu vergleichen und einen Abstandswert (20, 22) zwischen diesen zu ermitteln, der zu Gemeinsamkeiten und/oder Unterschieden zwischen diesen korrespondiert.

6. System nach einem der voranstehenden Ansprüche, **dadurch gekennzeichnet, dass** das System (25) eine Anzeigeeinrichtung (29) aufweist und zur Anzeige einer Ergebnisoberfläche (O) mit der Anzeigeeinrichtung (29) ausgebildet ist, wobei auf der Ergebnisoberfläche (O) mehrere, jeweils ein Lösungselement (1) repräsentierende Lösungselement-Äquivalente (L) und mindestens ein das Suchprofil (2) repräsentierendes Suchprofil-Äquivalent (S) darstellbar sind, wobei die Lösungselement-Äquivalente (L) und das Suchprofil-Äquivalent (S) automatisch auf Basis der ermittelten Abstandswerte (20, 22) zueinander angeordnet werden oder sind, so dass Abstände zwischen den Lösungselement-Äquivalenten (L) und dem Suchprofil-Äquivalent (S) den Abstandswerten (20, 22) entsprechen oder von diesen abgeleitet sind.

7. System nach einem der voranstehenden Ansprüche, **dadurch gekennzeichnet, dass** das System (25) zur Durchführung des Verfahrens nach einem der Ansprüche 9 bis 14 ausgebildet ist.

8. Verwendung eines Systems (25) nach einem der Ansprüche 1 bis 7 oder eines Verfahrens nach einem der Ansprüche 9 bis 14 zur Suche einer Baugruppe oder eines Bauteils eines industriellen Erzeugnisses als Lösungselement (1), wobei das Lösungselement (1) zur Konstruktion des industriellen Erzeugnisses mittels eines CAD-Systems verwendet wird, vorzugsweise wobei das Lösungselement (1) durch das System (25) aufgefunden und in dem CAD-System zur Definition eines Teils des industriellen Erzeugnisses verwendet wird.

9. Verfahren zum Auffinden von Lösungselementen (1), vorzugsweise von technischen Bauteilen oder Baugruppen eines industriellen Erzeugnisses, insbesondere zur Verwendung in einem CAD-System für die Konstruktion, Konfiguration und/oder automatisierte Herstellung des industriellen Erzeugnisses, wobei das Auffinden der Lösungselemente (1) mittels einer automatisierten Suche auf Basis eines Suchprofils (2) erfolgt,
wobei zu den Lösungselementen (1) korrespondierende Objektprofile (13) bereitgestellt werden, und
wobei ein Suchprofil (2) aufweisend mindestens ein Suchmerkmal (4A-4F, 5A-5C, 7, 8) zur Charakterisierung einer möglichen technischen Eigenschaft eines Lösungselements (1) und eine dem Suchmerkmal (4A-4F, 5A-5C, 7, 8) zugeordnete Suchmerkmalsausprägung (4'A-4'F, 5'A-5'C, 7', 8') zur Spezifizierung des Suchmerkmals (4A-4F, 5A-5C, 7, 8) bereitgestellt wird,
**dadurch gekennzeichnet,**
**dass** das Suchmerkmal (8) und eine zugeordnete Suchmerkmalsausprägung (8') zu einer konkreten, spezifischen, expliziten, eindeutigen, messbaren, und/oder direkt - insbesondere auf einer Skala - abbildbaren Eigenschaft und/oder einer Eigenschaft, die nicht die geometrische Topographie charakterisiert bzw. keine Transformation eines Modells eines Lösungselements (1) oder Teils eines Lösungselements (1) ist, korrespondieren, im Folgenden nicht-geometrisches Suchmerkmal (8) bzw. nicht-geometrische Suchmerkmalsausprägung (8') genannt, und dass mit einer Suche nach der nicht-geometrischen Suchmerkmalsausprägung (8') Abstandswerte (20, 22) ermittelt werden, die Ähnlichkeiten oder Unähnlichkeiten des Suchprofils (2) mit den jeweiligen Objektprofilen (13) repräsentieren; und/oder
**dass** das Suchprofil (2) um mindestens ein dem Suchmerkmal (4A-4F, 7, 8) oder der Suchmerkmalsausprägung (4'A-4'F, 7', 8') zugeordnetes Erweiterungsmerkmal (5A-5C) ergänzt wird, wobei das Erweiterungsmerkmal (5A-5C) als Suchmerkmal (4A-4F, 7, 8) mit oder ohne zugeordneter Suchmerkmalsausprägung (4'A-4'F, 7', 8') für das Auffinden der Lösungselemente (1) bereitstellt oder verwendet wird; und/oder
**dass** mindestens eines von mehreren Suchmerkmalen (4A-4F, 5A-5C, 7, 8) und/oder eine korrespondierende Suchmerkmalsausprägung (4'A-4'F, 5'A-5'C, 7', 8') und/oder ein hiermit ermitteltes Ergebnis, insbesondere eine Ähnlichkeitsziffer (17A-17F), über einen eine Relevanz des Suchmerkmals (4A-4F, 5A-5C, 7, 8) repräsentierenden Relevanzoperator (18) gewichtet werden/wird.

10. Verfahren nach Anspruch 9 oder System nach einem der Ansprüche 1 bis 8, **dadurch gekennzeichnet, dass** für das Suchmerkmal (4A-4F, 5A-5C, 7, 8) ein Validierungsmittel (6) zur Validierung bzw. zum Gültigkeitsnachweis der zugeordneten Suchmerkmalsausprägung (4'A-4'F, 5'A-5'C, 7', 8') bereitgestellt wird.

11. Verfahren nach Anspruch 9 oder 10 oder System nach einem der Ansprüche 1 bis 8 oder 10, **dadurch gekennzeichnet, dass** mindestens ein erstes Objektprofil (13) bereitgestellt wird, das ein zugeordnetes Lösungselement (1) repräsentiert,
vorzugsweise wobei das Suchprofil (2) mit dem Objektprofil (13) verglichen oder verrechnet wird,
insbesondere wobei mit oder aus dem oder als Ergebnis dieses Vergleichs oder dieser Verrechnung mindestens eine, vorzugsweise dimensionslose, Ähnlichkeitsziffer (18A-18F) zur Ermittlung eines ersten Abstandswertes (20) zwischen dem Objektprofil (13) bzw. dem hierzu korrespondierenden Lösungselement (1) und dem Suchprofil (2) ermittelt wird.

12. Verfahren oder System nach Anspruch 11, **dadurch gekennzeichnet, dass** mindestens ein zweites Objektprofil (21) bereitgestellt wird, das ein weiteres, dem zweiten Objektprofil (21) zugeordnetes Lösungselement (1) repräsentiert,
vorzugsweise wobei das erste Objektprofil (13) und das zweite Objektprofil (21) bzw. die hierzu korrespondierenden Lösungselemente (1) miteinander verglichen oder verrechnet werden,
insbesondere wobei mit oder aus dem Ergebnis oder als Ergebnis dieses Vergleichs oder dieser Verrechnung mindestens eine, vorzugsweise dimensionslose, Ähnlichkeitsziffer (18A-18F) zur Ermittlung eines zweiten Abstandswertes (22) zwischen den Objektprofilen (13, 21) bzw. den hierzu korrespondierenden Lösungselementen (1) ermittelt wird.

13. Verfahren nach einem der Ansprüche 9 bis 12 oder System nach einem der Ansprüche 1 bis 8 oder 10 bis 12, **dadurch gekennzeichnet, dass** das Suchprofil (2), vorzugsweise automatisch, insbesondere über eine Benutzerschnittstelle (26), durch Ableiten und/oder Verarbeiten mindestens eines Kontextelements (23A-23F) erfasst und/oder ermittelt wird.

14. Verfahren oder System nach Anspruch 13, **dadurch gekennzeichnet, dass** mehrere Suchprofile (2) durch Ableiten und/oder Verarbeiten vorzugsweise unterschiedlicher Kontextelemente (23A-23F) erfasst und/oder ermittelt werden.

15. Computerprogrammprodukt, insbesondere computerlesbares Speichermedium, aufweisend Programmcodemittel, die dazu ausgebildet sind, wenn sie auf einem Computer oder Prozessor ausgeführt werden, das Verfahren gemäß einem der Patentansprüche 9 bis 14 auszuführen.
